(19)

Europäisches
Patentamt
European
Patent Office
Office européen
des brevets

(11) **EP 2 214 167 A1**

(12) **EUROPEAN PATENT APPLICATION**
published in accordance with Art. 153(4) EPC

(43) Date of publication:
**04.08.2010 Bulletin 2010/31**

(21) Application number: **08842182.1**

(22) Date of filing: **09.09.2008**

(51) Int Cl.:
***G11B 7/0045*** (2006.01)

(86) International application number:
**PCT/JP2008/066230**

(87) International publication number:
**WO 2009/054196 (30.04.2009 Gazette 2009/18)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **26.10.2007 JP 2007279672**

(71) Applicant: **Sharp Kabushiki Kaisha
Osaka-shi, Osaka 545-8522 (JP)**

(72) Inventors:
• **ADACHI,Yoshihisa
Osaka-shi, Osaka 545-8522 (JP)**
• **MAEDA, Shigemi
Osaka-shi, Osaka 545-8522 (JP)**
• **ETOH, Atsushi
Osaka-shi, Osaka 545-8522 (JP)**

(74) Representative: **Müller - Hoffmann & Partner
Patentanwälte
Innere Wiener Strasse 17
81667 München (DE)**

(54) **RECORDING PARAMETER SETTING DEVICE, INFORMATION RECORDING MEDIUM, PROGRAM, COMPUTER-READABLE RECORDING MEDIUM CONTAINING THE PROGRAM, AND RECORDING PARAMETER SETTING METHOD**

(57) A recording parameter setting device includes: (i) a trial recording parameter setting section (23) configured to inquire, in accordance with the recording information, a storage section (3) storing recording parameters for controlling heat of rear edges of recording marks, and set a trial recording parameter, wherein the recording parameters are classified at least in accordance with an integral multiple of a predetermined unit recording mark length, wherein recording parameters for recording mark lengths equal to or longer than a predetermined recording mark length are classified into a group of recording parameters for odd mark lengths and a group of recording parameters for even mark lengths; and (ii) a reproduced signal quality judging means (26) configured to perform reproduced signal quality judgment, wherein, if a reproduced signal obtained by reproduction of the trial recording carried out in accordance with the trial recording parameter does not satisfy a predetermined reproduced signal quality, the reproduced signal quality judging means further classifies the recording parameters for the recording mark lengths equal to or longer than the predetermined recording mark length into more detailed groups and causes to carry out the trial recording again, and if the reproduced signal satisfies the predetermined reproduced signal quality, the reproduced signal quality judging means sets the trial recording parameter as the recording parameter. This allows formation of a recording mark capable of more surely providing a good reproduced signal quality while the number of recording parameters to be used is reduced.

FIG. 1

**Description**

Technical Field

The present invention relates to a recording parameter setting device for recording and reproducing information, an information recording medium, a program for causing a computer in the recording parameter setting device to function, a computer-readable recording medium storing the program, and a recording parameter setting method.

Background Art

Recording/reproducing devices for an information recording medium (such as an optical disc) which stores large amount of data have conventionally adopted an art which records information by focusing a laser beam onto information recording surface of an information recording medium and heating the information recording medium, so as to change physical characteristics in the vicinity of the information recording surface. According to the art, binary digital data is recorded on the information recording surface of the information recording medium. The binary digital data is expressed by (i) two states including a state where a recording mark is formed on the information recording medium (hereafter, referred to as "mark") and a state where a recording mark is not formed (hereafter, referred to as "space") and (ii) each length of the two states. The digital data is called "recording information" herein. Actually, the recording information is recorded on the information recording medium such that: (1) a recording parameter is set in accordance with the recording information to be recorded; (2) the recording parameter changes the laser beam; (3) the laser beam thus changed forms a recording mark on the information recording surface of the information recording medium, thereby recording the recording information on the information recording medium.

In recent years, in response to an increase in the amount of data which is processed, recording speed is being increased for the purpose of reducing the processing time of a recording/reproducing device. Even when an information recording medium becomes capable of recording at a high speed, the information recording medium needs to be capable of recording also at a low speed so as to ensure backward compatibility. Therefore, the information recording medium capable of recording at a high speed has a property which is apt to accumulate heat so as to improve its recording sensitivity. The heat accumulation can distort a recording mark, thereby leading to deterioration in a reproduced signal quality. Therefore, in an information recording medium capable of recording at a high speed, it is important to control heat for forming a recording mark.

As an art which is used for controlling heat for forming a recording mark, there has been known write strategy, which is a high-level laser output control technology. The write strategy carries out laser output control in accordance with the recording parameter so as to control heat for forming a recording mark. As the number of recording parameters increases, the control of heat for forming a recording mark becomes complicated. There is a method where a recording parameter is once stored in an information recording medium in a form of a look-up table, and the recording parameter is read out from the look-up table by a recording/reproducing device so as to set the recoding parameter. In this method, the increased number of recording parameters prolongs read-out time of information from the look-up table by using the recording/reproducing device. This causes delay in the timing of starting a recording process. Therefore, it is preferable to use as small number of recording parameters as possible.

In view of this, for example, Patent Document 1: Japanese Unexamined Patent Application Publication, No. 2005-92942 (published on April 7, 2005) discloses an optical disc recording method including a look-up table which defines recording parameters. In the method, the procedure of controlling heat for forming a recording mark proceeds while the table is looked up.

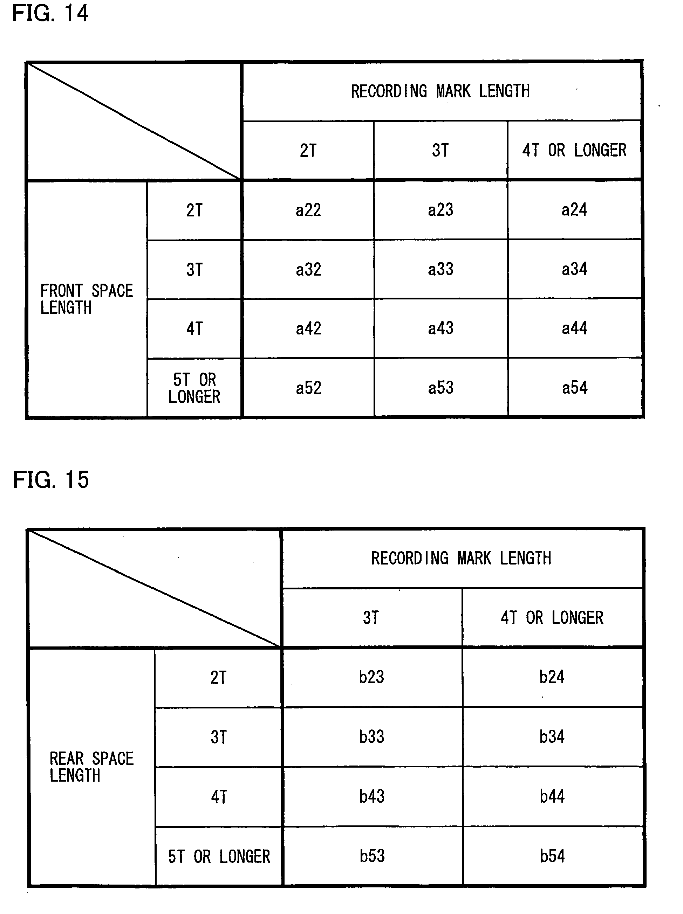

Specifically, Patent Document 1 describes as follows. A recording parameter for a top pulse which controls heat of a front edge, at which a forming process of a recording mark starts, uses a look-up table in which (i) front space lengths of recording marks are classified into four groups: 2T, 3T, 4T, and 5T or longer and (ii) recording mark lengths are classified into three groups: 2T, 3T, and 4T or longer (see Fig. 14). Also, a recording parameter for a last pulse which controls heat of a rear edge, at which a forming process of a recording mark ends, uses a look-up table in which (i) rear space lengths of recording marks are classified into four groups: 2T, 3T, 4T, and 5T or longer and (ii) recording mark lengths are classified into two groups: 3T and 4T or longer (see Fig. 15).

That is, in the look-up table disclosed in Patent Document 1, mark lengths of 4T or longer are classified into the same group, and front and rear space lengths of 5T or longer are classified into the same group. This reduces the number of recording parameters. Thereby, heat for forming a recording mark is controlled at a front edge and a rear edge. The symbol "T" herein represents a time equivalent to one cycle of a clock. For example, a mark length of 2T indicates a region (i.e., a recording region) where a recording mark "1" is formed for a time equivalent to two cycles of the clock. Similarly, a space length of 2T indicates a region where no recording mark is formed for a time equivalent to two cycles of the clock.

In Patent Literature 2, the number of parameters of a recording waveform is reduced in order to deal with various kinds of medium and linear velocity. Specifically, the parameters are set so that mark lengths are largely classified into four groups: 2T, 3T, a group of odd number (4T, 6T, and 8T), and a group of even number (5T, 7T, and 9T).

With a further increase in a recording speed expected in the future, a recording mark will be formed on an information recording medium having improved recording sensitivity. When a recording mark is formed by using a laser beam, heat distribution is high at a rear edge of a recording mark, at which rear edge the forming process of the recording mark ends. Therefore, the increase in the recording speed will strengthen the tendency to accumulate heat at the rear edge. This leads to an increasing necessity for controlling heat at the rear edge more strictly by using the recording parameter.

Patent Document 1, however, uses the same setting for (i) the classification of recording parameters for controlling heat of a front edge, at which a forming process of a recording mark starts and (ii) the classification of recording parameters for controlling heat of a rear edge, which needs to be controlled strictly.

Meanwhile, the technique disclosed in Patent Literature 2 adopts a classification method in which recording mark lengths are classified into a group of odd number (4T, 6T, and 8T) and a group of even number (5T, 7T, and 9T). However, Patent Literature 2 also uses the same setting for (i) the classification of recording parameters (top pulse width of the pulse train for forming a recording mark) for controlling heat of a front edge, at which a forming process of a recording mark starts and (ii) the classification of recording parameters (last pulse width of the pulse train for forming a recording mark) for controlling heat of a rear edge, which needs to be controlled strictly.

More specifically, in each of the conventional arts disclosed in Patent Literatures 1 and 2, both types of the recording parameters use a look-up table in which recording mark lengths of 4T or longer are classified into the same group.

As described above, in each of the conventional arts disclosed in Patent Literatures 1 and 2, both types of the recording parameters use a look-up table in which recording mark lengths of 4T or longer are classified into the same group without regard to a difference in characteristic between the types of the recording parameters. That is, each of the conventional arts does not take into consideration necessity of strict control of a rear edge although each takes into consideration necessity of reduction in the number of recording parameters to be used. Further, each of the conventional arts disclosed in

Patent Literatures 1 and 2 does not specifically disclose on what basis the recording mark lengths, the front space lengths, and the rear space lengths are classified in the look-up table, which defines the recording parameters, for the purpose of reducing the number of recording parameters.

Therefore, although the number of the recording parameters is reduced, there is a problem that a good reproduced signal quality is not guaranteed (i.e., a reproduced signal quality as desired is not guaranteed) in reading out a recording mark actually.

Citation List

Patent Literature 1

Japanese Patent Application Publication, Tokukai, No. 2005-92942 A (Publication Date: April 7, 2005)

Patent Literature 2

Japanese Patent Application Publication, Tokukai, No. 2005-92906 A (Publication Date: April 7, 2005)

Patent Literature 3

Japanese Patent Application Publication, Tokukai, No. 2007-317343 A (Publication Date: December 6, 2007)

Summary of Invention

The present invention was attained in view of the above problems, and an object of the present invention is to provide a recording parameter setting device etc. which is capable of forming a recording mark capable of surely obtaining a good reproduced signal quality while the number of recording parameters to be used is reduced.

In order to attain the above object, a recording parameter setting device of the present invention configured to set recording parameters for forming a recording mark on an information recording medium in accordance with recording information, is characterized by that the recording parameters include: a first group of recording parameters used for controlling heat of a front edge of the recording mark; and a second group of recording parameters used for controlling heat of a rear edge of the recording mark, the first group of recording parameters being classified at least in accordance with an integral multiple of a predetermined unit recording mark length out of the recording information, wherein recording parameters for recording mark lengths which fall in a range from a first predetermined recording mark length to a maximum recording mark length are classified into a group of recording parameters for odd mark lengths and a group of recording parameters for even mark lengths, the second group of recording parameters being classified in accordance with the integral multiple of the predetermined unit recording mark length, wherein recording parameters for recording mark lengths which fall in a range from longer than a second predetermined recording mark length to the maximum recording mark length are classified into a group of recording parameters for odd mark lengths and a group of recording parameters for even mark lengths, the second predetermined recording mark length being equal to or longer than the first predetermined recording mark length.

In order to attain the above object, a recording parameter setting method of the present invention for setting recording parameters for forming a recording mark on an information recording medium in accordance with recording information, is characterized by that the recording parameters include: a first group of recording parameters used for controlling heat of a front edge of the recording mark; and a second group of recording parameters used for controlling heat of a rear edge of the recording mark, the recording parameter setting method including the steps of: (a) classifying the first group of recording parameters at least in accordance with an integral multiple of a predetermined unit recording mark length out of the recording information, wherein recording parameters for recording mark lengths which fall in a range from a first predetermined recording mark length to a maximum recording mark length are classified into a group of recording parameters for odd mark lengths and a group of recording parameters for even mark lengths, (b) classifying the second group of recording parameters in accordance with the integral multiple of the predetermined unit recording mark length wherein recording parameters for recording mark lengths which fall in a range from longer than a second predetermined recording mark length to the maximum recording mark length are classified into a group of recording parameters for odd mark lengths and a group of recording parameters for even mark lengths, the second predetermined recording mark length being equal to or longer than the first predetermined recording mark length.

According to the arrangement or the method, the recording parameter setting device sets a recording parameter for forming a recording mark on an information recording medium in accordance with recording information.

The recording information here means binary digital data recorded on an information recording medium described below. The binary digital data is expressed by (i) two states including a state where a recording mark is formed on the information recording medium (i.e., a mark) and a state where a recording mark is not formed (i.e., a space) and (ii) each length of the two states. That is, the followings are specified in the recording information: (i) the two states including the state where a recording mark is formed on the information recording medium (i.e., the mark) and the state where a recording mark is not formed (i.e., the space); and (ii) each length of the two states (each of (i) and (ii) is set in a recording parameter).

The device may record information by focusing a laser beam of a recording pulse having a predetermined pulse train onto an information recording surface of an information recording medium and heating the information recording surface of the information recording medium so as to change the physical characteristics in the vicinity of the information recording surface.

For example, in the (1, 7) RLL modulation method, a shortest recording mark of 2T has a pulse train of a recording pulse including a top section and a last section. A recording mark which is longer than the shortest recording mark has a pulse train of a recording pulse including the top section, the last section, and an intermediate section which is provided between the top section and the last section and whose length is determined in accordance with the mark length. The present invention is not limited to the (1, 7) RLL modulation method. The (1, 7) RLL code is a code which limits a minimum value and a maximum value of an inversion interval in magnetic digital recording and optical digital recording.

In other modulation methods, for example, the shortest recording mark may be 3T. In this case, a shortest recording mark may include a top section, an intermediate section, and a last section. In another case, a shortest recording mark may include a top section only.

The symbol "T" (predetermined unit recording mark length) herein represents a time equivalent to one cycle of a clock. For example, a 3T recording mark length indicates a recording region where a recording mark is formed in time equivalent to three cycles of the clock.

The pulse train is formed from recording power, space power, bias power, and cooling power. Note that the recording power, the space power, the bias power, and the cooling power which form a pulse train are termed "recording power parameter". These recording power parameters are included in the foregoing recording parameters.

The recording power of the recording pulse of the top section, the recording power of the recording pulse of the intermediate section, and the recording power of the recording pulse of the last section may be identical to each other. However, the present invention is not limited to this. The recording power of the top section, the recording power of the intermediate section, and the recording power of the last section may be different from each other. Also, the smallest power may be the cooling power, the bias power, the space power, and the recording power, in this order. However, the present invention is not limited to this. Note that, it is preferable that the recording power of the recording pulse of either of the top section, the intermediate section or the last section has the highest value and the bias power or the cooling power has the lowest value.

In the (1, 7) RLL modulation method, a recording mark which is longer than the shortest recording mark has a pulse train of a recording pulse including a top section, an intermediate section, and a last section. Therefore, the top section, the intermediate section, and the last section of the pulse train are referred to as "top pulse", "intermediate pulse", and "last pulse", respectively.

According to the above arrangement, the recording parameters include: a first group of recording parameters used for controlling heat of a front edge of the recording mark; and a second group of recording parameters used for controlling heat of a rear edge of the recording mark.

The method includes the steps of classifying a first group of recording parameters used for controlling heat of a front edge of the recording mark; and classifying a second group of recording parameters used for controlling heat of a rear edge of the recording mark.

Note that the front edge is a position at which a forming process of a recording mark starts, and the rear edge is a position at which a forming process of a recording mark ends.

An exemplary recording parameter of the first group of recording parameters used for controlling heat of a front edge of the recording mark is a top section rise position at which a top pulse starts to rise or a top pulse width.

An exemplary recording parameter of the second group of recording parameters used for controlling heat of a rear edge of the recording mark is a last section rise position at which a last pulse starts to rise, a last pulse width, or a cooling end position at which a cooling period which involves irradiation of a cooling pulse ends. Such two exemplary recording parameters may be referred to as "recording pulse parameter".

According to the arrangement and the method, the first group of recording parameters is classified at least in accordance with an integral multiple of a predetermined unit recording mark length T out of the recording information, wherein recording parameters for recording mark lengths which fall in a range from a first predetermined recording mark length to a maximum recording mark length are classified into a group of recording parameters for odd mark lengths and a group of recording parameters for even mark lengths.

Meanwhile, the second group of recording parameters is classified in accordance with the integral multiple of the predetermined unit recording mark length, wherein recording parameters for recording mark lengths which fall in a range from longer than a second predetermined recording mark length to the maximum recording mark length are classified into the group of recording parameters for odd mark lengths and the group of recording parameters for even mark lengths.

Note that each of the first predetermined recording mark length and the second predetermined recording mark length indicates a range of the recording mark length in which a rear edge is supposed not to be affected by heat accumulated at a front edge of a recording mark, that is, in which the recording parameter of the rear edge is supposed to be controlled separately from the recording parameter of the front edge. Each of the first predetermined recording mark length and the second predetermined recording mark length is arbitrary set depending on the type of an information recording medium.

A relationship between the total number of classifications of the first group of recording parameters and the total number of classifications of the second group of recording parameters is expressed by the following equation.

The total number of classifications of the first group of recording parameters = the number of recording mark lengths which are shorter than the first predetermined recording mark length + one classification (i.e. the group of odd mark lengths) + one classification (i.e. the group of even mark lengths)

= the number of recording mark lengths which are shorter than the first predetermined recording mark length + two classifications

(Case where the following is satisfied: the first predetermined recording mark length = the second predetermined recording mark length)

the total number of classifications of the second group of recording parameters = the number of recording mark lengths which are shorter than the second predetermined recording mark length + one classification (i.e. the second predetermined recording mark length) + one classification (the group of odd mark lengths) + one classification (the group of even mark lengths)

= the number of classifications which are shorter than

the second predetermined recording mark length + three classifications

difference between (i) the total number of classifications of the first group of recording parameters and (ii) the total number of classifications of the second group of recording parameters = one classification + the number of recording mark lengths which are shorter than the second predetermined recording mark length – the number of recording mark lengths which are shorter than the first predetermined recording mark length = one classification

(Case where the following is satisfied: the first predetermined recording mark length < the second predetermined recording mark length)

the total number of classifications of the second group of recording parameters = the number of recording mark lengths which are shorter than the second predetermined recording mark length + one classification (i.e. the second predetermined recording mark length) + one classification (i.e. the group of odd mark lengths) + one classification (i.e. the group of even mark lengths)

= the number of recording mark lengths which are shorter than the second predetermined recording mark length + three classifications

difference between (i) the total number of classifications of the first group of recording parameters and

(ii) the total number of classifications of the second group of recording parameters = one classification + the number of recording mark lengths which are shorter than the second predetermined recording mark length − the number of recording mark lengths which are shorter than the first predetermined recording mark length ≥ two classifications

The above description reveals that the total number of classifications of the second group of recording parameters is larger than the total classifications of the first group of recording parameters by not less than one classification.
In a case where each of the first predetermined recording mark length and the second predetermined recording mark length is changed into a larger value, (i) the number of classifications of the first group of recording parameters out of the total number of classifications of the first group of recording parameters and the total number of classifications of the second group of recording parameters increases and (ii) the number of classifications of the second group of recording parameters out of the total number of classifications of the first group of recording parameters and the total number of classifications of the second group of recording parameters increases. Note that it is also possible that the value of the first predetermined recording mark length of the first group of recording parameters is fixed and the value of the second predetermined recording mark length is changed into a larger value.

The first group of recording parameters may contain a single kind of recording parameter or may contain plural kinds of recording parameter. The second group of recording parameters may contain a single kind of recording parameter or may contain plural kinds of recording parameter. In a case where plural kinds of recording parameter exist, such plural kinds of recording parameter may be the same or may be different in the number of classification.

For example, in a case where the second group of recording parameters contains a single kind of recording parameter, i.e., a recording parameter of a last pulse width, a last section pulse of all of the second group of recording parameters can be optimized more accurately.

On the other hand, in a case where the second group of recording parameters contains plural kinds of recording parameter, i.e., a last section rise position, a last pulse width, and a cooling end position, optimization can be carried out while a balance in a pulse train is secured.

Note that the last section rise position, the last pulse width, and the cooling end position may be the same or may be different in the number of classifications. It is only necessary that the number of classifications of the second group of recording parameters is larger than the number of classifications of the first group of recording parameters.

The above description has dealt with a case where three kinds of recording parameters are used. However, two kinds of recording parameters may be used.

It goes without saying that the same is true for the first group of recording parameters.

In the above description, a recording mark length is used as recording information to be classified in a look-up table. However, the present invention is not limited to this. For example, both of a recording mark length and a space length may be used as recording information in classifying the first group of recording parameters and the second group of recording parameters. In this case, if the classification of a space length is not changed and only the classification of a recording mark length is changed, the number of recording parameters can be reduced as in the present invention.

Since the total number of classification of the second group of recording parameters is larger than the total number of classifications of the first group of recording parameters, the recording parameters belonging to the respective classifications of the second group of recording parameters are set to be more detailed than the recording parameters belonging to the respective classifications of the first group of recording parameters. Thus, optimization of a reproduced signal quality can be carried out.

That is, according to the classifications or the classification method, the second group of recording parameters can be classified into more detailed groups than the first group of recording parameters. Also, it is possible to reduce the number of recording parameters, compared with a method in which both of the first group of recording parameters and the second group of recording parameters are classified into the increased number of groups.

A rear edge of a recording mark is more apt to be affected by heat than any other regions in the recording mark. Therefore, classifying the second group of recording parameters for controlling heat of a rear edge into more detailed groups allows to more strictly control heat of a rear edge, at which a forming process of a recording mark ends. This compensates the effect caused by accumulated heat, thereby forming a recording mark capable of providing a good reproduced signal quality.

As a result, it is possible to form a recording mark capable of more surely providing a good reproduced signal quality while the number of recording parameters to be used is reduced.

Thus, it is possible to provide a recording parameter setting device or a recording parameter setting method, each of which allows formation of a recording mark capable of more surely providing a good reproduced signal quality while the number of recording parameters to be used is reduced.

In order to attain the above object, the recording parameter setting device of the present invention configured to set a recording parameter for forming a recording mark on an information recording medium in accordance with recording information, includes: (i) trial recording parameter setting means configured to inquire, in accordance with the recording information, a storage section storing recording parameters used for controlling heat of rear edges of recording marks, and to set a trial recording parameter for carrying out trial recording, wherein the recording parameters are classified in accordance with at least an integral multiple of a predetermined unit recording mark length out of the recording information wherein recording parameters for recording mark lengths which fall in a range from a predetermined recording mark length to a maximum recording mark length are classified into a group of recording parameters for odd mark lengths and a group of recording parameters for even mark lengths; and (ii) reproduced signal quality judging means configured to perform reproduced signal quality judgment, wherein, if a reproduced signal obtained by reproduction of the trial recording carried out in accordance with the trial recording parameter does not satisfy a predetermined reproduced signal quality, the reproduced signal quality judging means further classifies the recording parameters for the recording mark lengths equal to or longer than the predetermined recording mark length into more detailed groups and causes to carry out the trial recording again , and if the reproduced signal satisfies the predetermined reproduced signal quality, the reproduced signal quality judging means sets the trial recording parameter as the recording parameter.

In order to attain the above object, a recording parameter setting method of the present invention for setting a recording parameter for forming a recording mark on an information recording medium in accordance with recording information, includes the steps of: (a) inquiring, in accordance with the recording information, a storage section storing recording parameters used for controlling heat of rear edges of recording marks, and setting a trial recording parameter for carrying out trial recording, wherein the recording parameters are classified in accordance with at least an integral multiple of a predetermined unit recording mark length out of the recording information wherein recording parameters for recording mark lengths which fall in a range from a predetermined recording mark length to a maximum recording mark length are classified into a group of recording parameters for odd mark lengths and a group of recording parameters for even mark lengths; and (b) performing reproduced signal quality judgment, wherein, if a reproduced signal obtained by reproduction of the trial recording carried out in accordance with the trial recording parameter does not satisfy a predetermined reproduced signal quality, the recording parameters for the recording mark lengths equal to or longer than the predetermined recording mark length are further classified into more detailed groups and the trial recording is caused to be carried out again, and if the reproduced signal satisfies the predetermined reproduced signal quality, the trial recording parameter is set as the recording parameter.

According to the arrangement or the method, the trial recording parameter setting means or the step (a) is an arrangement or a method for setting a trial recording parameter for carrying out trial recording.

The reproduced signal quality judging means or the step (b) is configured to perform reproduced signal quality judgment, wherein, if a reproduced signal obtained by reproduction of the trial recording carried out in accordance with the trial recording parameter does not satisfy a predetermined reproduced signal quality, the reproduced signal quality judging means further classifies the recording parameters for the recording mark lengths equal to or longer than the predetermined recording mark length into more detailed groups and causes to carry out the trial recording again, and if the reproduced signal satisfies the predetermined reproduced signal quality, the reproduced signal quality judging means sets the trial recording parameter as the recording parameter.

That is, according to the arrangement or the method, the recording mark lengths which are equal to or longer than the predetermined recording mark length are further classified if the reproduced signal quality is bad due to the insufficient number of classification of the second group of recording parameters for controlling heat of the rear edge.

This makes it possible to provide a recording parameter setting device or a recording parameter setting method which is capable of more strictly control heat of a rear edge, at which a forming process of a recording mark ends, and compensating the effect caused by the heat accumulated at the rear edge, thereby forming a recording mark capable of providing a good reproduced signal quality.

In an arrangement where the second group of recording parameters fixed in advance is used, when a recording condition of a track on an information recording medium changes along with the lapse of time, the recording parameters cannot be changed accordingly so as to suit the change in the recording condition of the track. This may unable to form a recording mark capable of providing a good reproduced signal quality (i.e., a recording mark satisfying the predetermined reproduced signal quality) in a case where the recording condition of the track changes.

In contrast to this, the present invention has an arrangement where the second group of recording parameters is further classified depending on the result of trial recording. Therefore, even when the recording condition of the track on the information recording medium changes along with the lapse of time, the second group of recording parameters can be classified again so as to suit the change in the recording condition of the track. That is, it is possible to provide a recording parameter setting device or a recording parameter setting method in which, even when the recording condition of the track changes along with the lapse of time, a recording mark capable of providing a good reproduced signal quality (i.e., a recording mark satisfying the predetermined reproduced signal quality) can be formed.

Using data which is randomly selected gives an advantage such that a good reproduced signal quality can be achieved easily when recording marks are classified in steps from a recording mark having a shorter length.

Also, classifying recording mark lengths in steps from a recording mark having a shorter length allows the number of classifications of recording parameters to be a number just needed to satisfy a predetermined reproduced signal quality. That is, this gives an advantage such that the number of recording parameters in a look-up table is easily set to a number just needed to satisfy a predetermined reproduced signal quality.

For the reproduced signal quality, jitter, an error rate, or the like may be used. When every information recording medium has different bottom-level specs in jitter, an error rate, or the like, a bottom-level value prescribed by the specs may be used as a predetermined reproduced signal quality.

The predetermined reproduced signal quality herein means a level where an error in a reproduced signal can be corrected by the recording parameter setting device. The predetermined reproduced signal quality only needs to be capable of ensuring allowance for a quality fluctuation in the recording parameter setting device or the information recording medium of the present invention described below which occurs due to mass production or the other reasons.

As described above, according to the present invention, the process of determining the recording parameter which satisfies the predetermined reproduced signal quality proceeds while the number of classifications of the second group of recording parameters is being increased. This makes it possible to further reduce the number of classifications of the second group of recording parameters in a case where the recording parameter satisfying the predetermined reproduced signal quality is determined. At least a recording parameter for controlling heat of a rear edge is determined so as to satisfy the predetermined reproduced signal quality. This compensates the effect caused by the heat accumulated at the rear edge, thereby forming a recording mark capable of providing a good reproduced signal quality. This makes it possible to form a recording mark capable of more surely providing a good reproduced signal quality while the number of recording parameters to be used is reduced.

In order to attain the above object, an information recording medium of the present invention configured to store, in a predetermined region, recording parameters for forming a recording mark in accordance with recording information, is characterized by that the recording parameters include: a first group of recording parameters used for controlling heat of a front edge of the recording mark; and a second group of recording parameters used for controlling heat of a rear edge of the recording mark, the first group of recording parameters being classified at least in accordance with an integral multiple of a predetermined unit recording mark length out of the recording information, wherein recording parameters for recording mark lengths which fall in a range from a first predetermined recording mark length to a maximum recording mark length are classified into a group of recording parameters for odd mark lengths and a group of recording parameters for even mark lengths, the second group of recording parameters being classified in accordance with the integral multiple of the predetermined unit recording mark length wherein recording parameters for recording mark lengths which fall in a range from longer than a second predetermined recording mark length to the maximum recording mark length are classified into a group of recording parameters for odd mark lengths and a group of recording parameters for even mark lengths, the second predetermined recording mark length being equal to or longer than the first predetermined recording mark length.

For a fuller understanding of the nature and advantages of the invention, reference should be made to the ensuing detailed description taken in conjunction with the accompanying drawings.

Brief Description of Drawings

Fig. 1

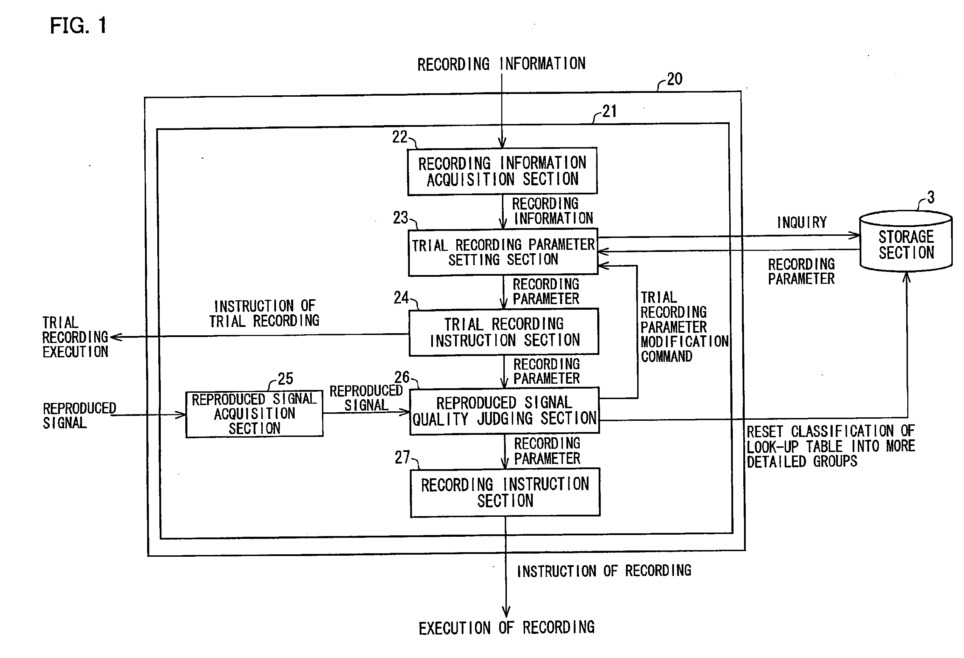

Fig. 1 is a functional block diagram illustrating one of the embodiments of a control section in an optical disc device in accordance with the present invention.
Fig. 2

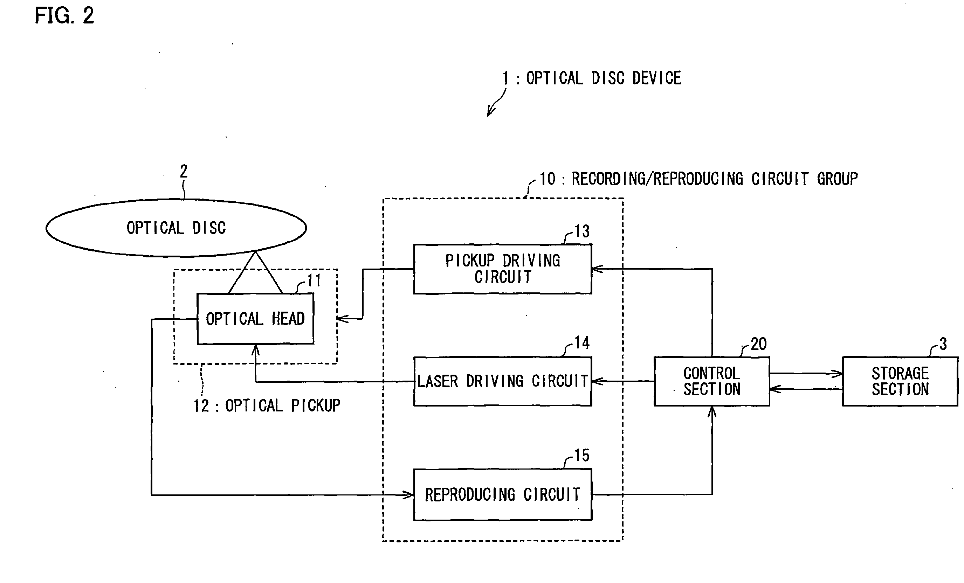

Fig. 2 is a block diagram illustrating one of the embodiments of the optical disc device.
Fig. 3

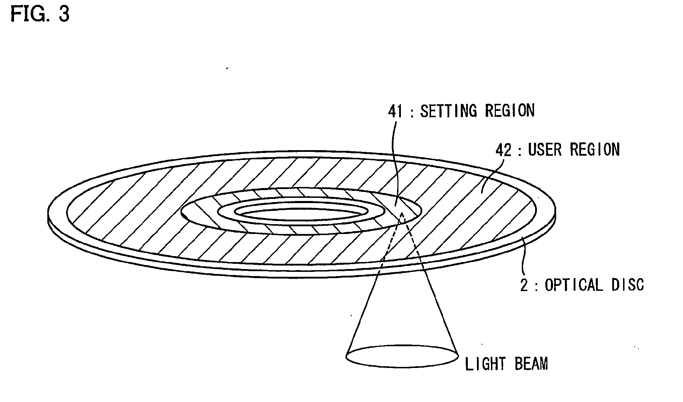

Fig. 3 is a perspective view of an optical disc on which information is recorded by the optical disc device.
Fig. 4

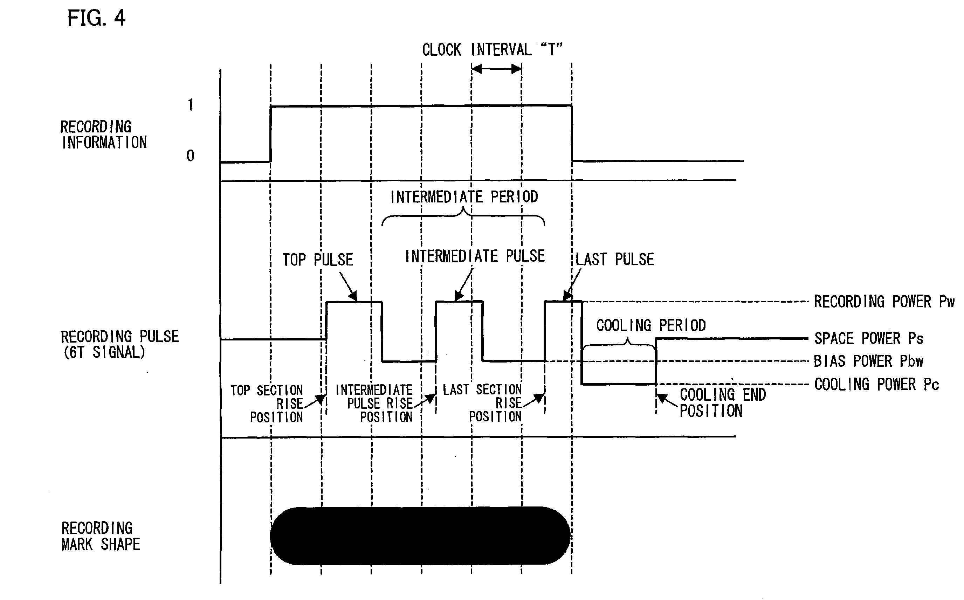

Fig. 4 is a timing chart illustrating a setting of a pulse train corresponding to recording information.
Fig. 5

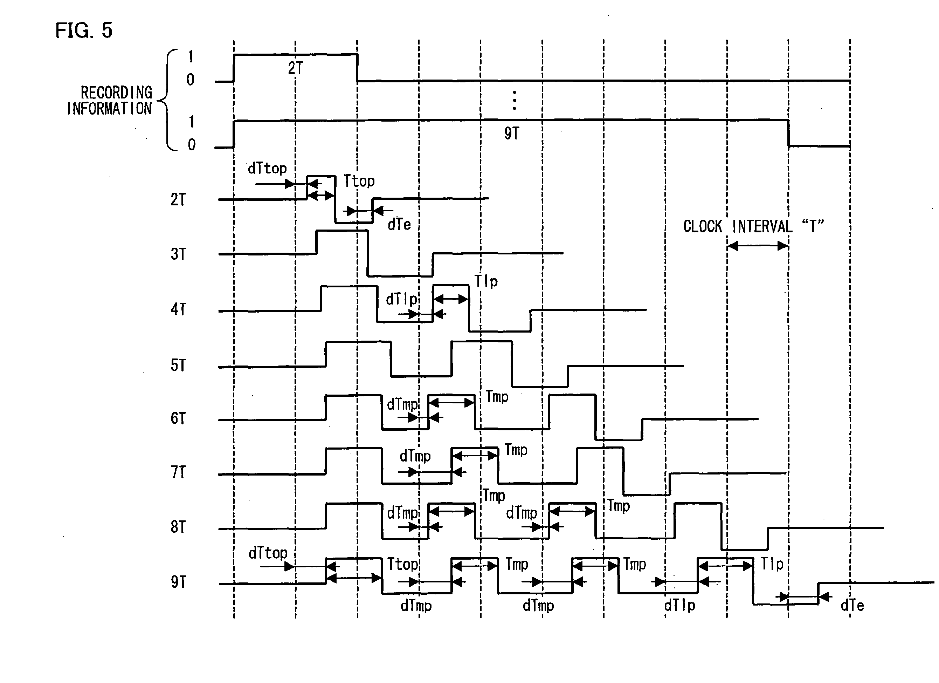

Fig. 5 is a timing chart illustrating a pulse train and a recording pulse parameter for forming recording marks whose lengths are 2T through 9T.
Fig. 6

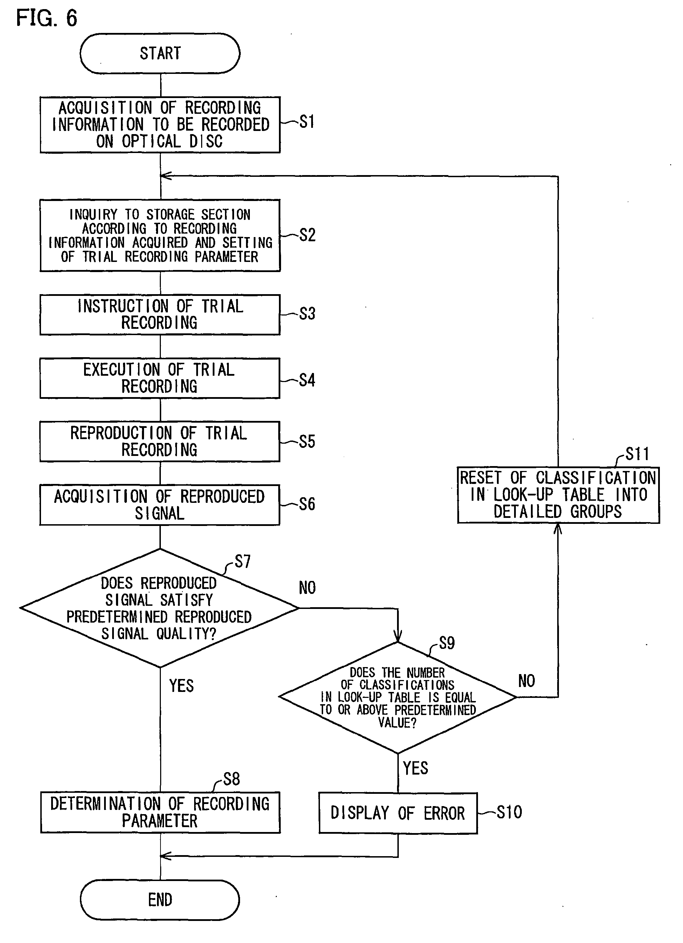

Fig. 6 is a flow chart illustrating a flow of recording parameter setting operation in the present invention.
Fig. 7

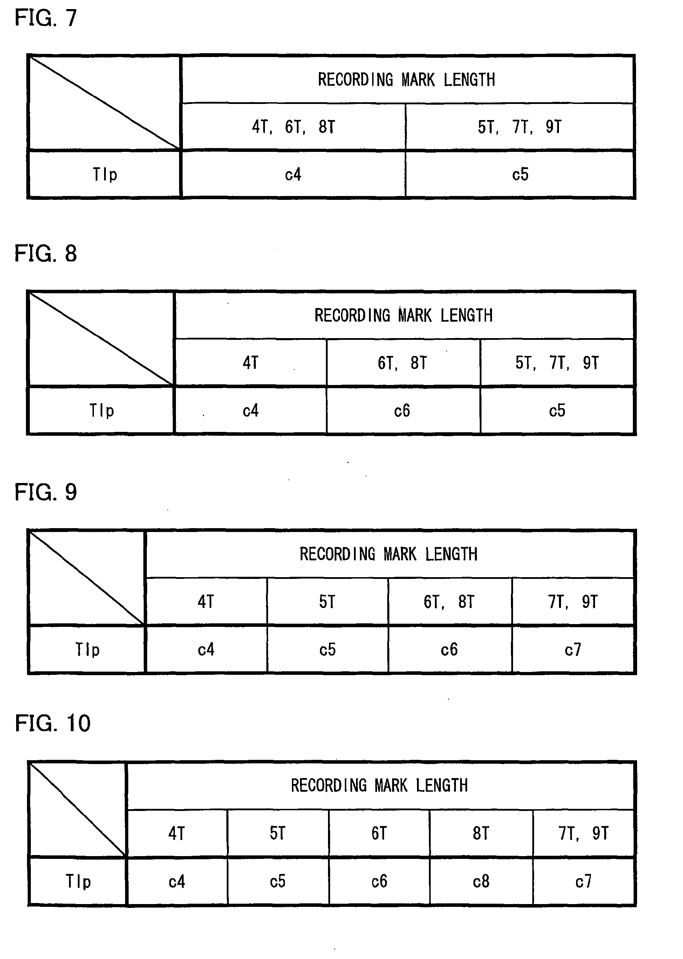

Fig. 7 is a view illustrating one of the embodiments of a look-up table in accordance with the present invention.
Fig. 8
Fig. 8 is a view illustrating one of the embodiments of a look-up table in accordance with the present invention.
Fig. 9
Fig. 9 is a view illustrating one of the embodiments of a look-up table in accordance with the present invention.
Fig. 10
Fig. 10 is a view illustrating one of the embodiments of a look-up table in accordance with the present invention.
Fig. 11

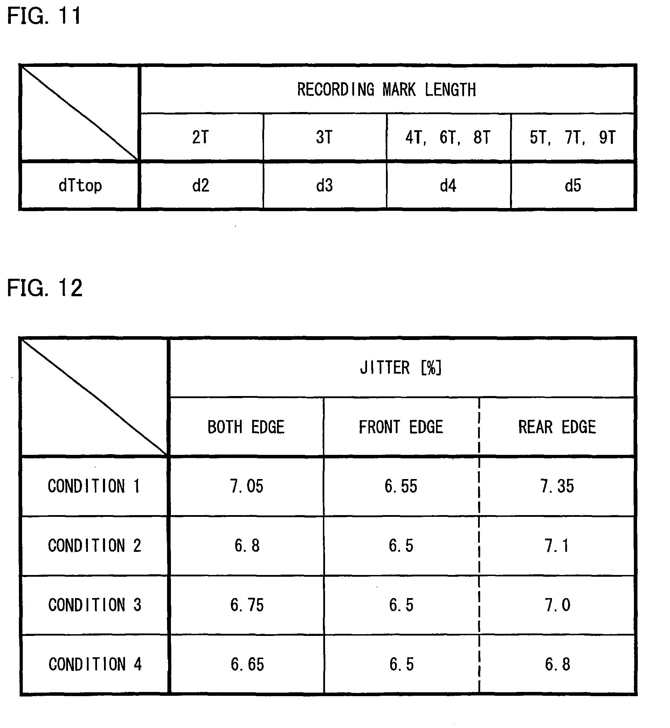

Fig. 11 is a view illustrating one of the embodiments of a look-up table in accordance with the present invention.
Fig. 12
Fig. 12 is a view illustrating a change in jitter related to a recording parameter condition.
Fig. 13

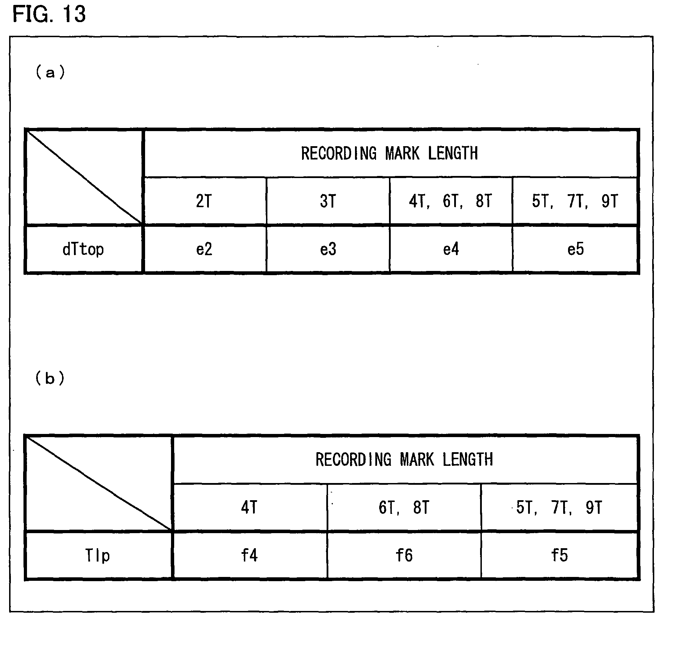

Fig. 13 is a view illustrating an exemplary look-up table recorded on an optical disc in the present invention. Fig. 13 (a) is a view illustrating an exemplary look-up table recorded on an optical disc in the present invention, and Fig. 13 (b) is a view illustrating another exemplary look-up table recorded on the optical disc.
Fig. 14
Fig. 14 is a view illustrating a look-up table in accordance with a conventional art.
Fig. 15
Fig. 15 is a view illustrating a look-up table in accordance with a conventional art.

Reference Signs List

1: Optical disc device (recording parameter setting device)
2: Optical disc (information recording medium)
3: Storage section
10: Recording/ reproducing circuit group
11: Optical head (optical pickup)
12: Optical pickup
13: Pickup driving circuit
14: Laser driving circuit
15: Reproducing circuit
20: Control section
21: Recording parameter setting section (recording parameter setting device)
22: Recording information acquisition section
23: Trial recording parameter setting section (trial recording parameter setting means)
24: Trial recording instruction section
25: Reproduced signal acquisition section
26: Reproduced signal quality judging section (reproduced signal quality judging means)
27: Recording instruction section
41: Setting region (predetermined region)
42: User region

Description of Embodiments

[Embodiment 1]

An embodiment of the present invention is described below with reference to Figs. 1 through 13 (b).
Firstly, as an example of a recording/reproducing device of the present embodiment, an optical disc device (recording parameter setting device) 1 is described. As illustrated in Fig. 2, the optical disc device 1 of the present embodiment includes an optical head (optical pickup) 11, an optical pickup 12, a pickup driving circuit 13, a laser driving circuit 14, a reproducing circuit 15, and a control section 20. The pickup driving circuit 13, the laser driving circuit 14, and the reproducing circuit 15 constitute a recording/ reproducing circuit group 10. The optical disc device 1 is a device for recording information on the optical disc (information recording medium) 2 and reproducing information from the optical disc (information recording medium) 2. The optical disc 2 may be any optical disc such as a magneto-optical disc, and is not limited to a particular kind.
The optical head 11 is included in the optical pickup 12. The optical head 11 irradiates the optical disc 2 with a light beam (i.e., a laser beam) so as to record/reproduce information. Also, the optical head 11 detects light reflected from the optical disc 2 and outputs the result of the detection to the reproducing circuit 15. The optical pickup 12, which includes the optical head 11, records and reproduces data. The optical pickup 12 can be moved in the direction of an optical axis and in a radial direction of the optical disc 2.
The pickup driving circuit 13 drives the optical pickup 12 in accordance with a control signal from the control section 20, and moves the optical pickup 12 toward a track (not illustrated) of the optical disc 2, that is, in the radial direction and in the direction of the optical axis. The laser driving circuit 14 controls an output of a light beam irradiated from the optical head 11. The reproducing circuit 15 converts the reflected light which is detected by the optical head 11 into a reproduced signal, and outputs the reproduced signal to the control section 20.
The control section 20 sets a recording parameter of a recording mark, which is information to be stored in the optical disc 2. Also, the control section 20 moves the optical pickup 12 by using the pickup driving circuit 13, and causes the optical head 11 to irradiate a light beam by using the laser driving circuit 14. In addition, the control section 20 receives, from the reproducing circuit 15, the reproduced signal which is obtained by the conversion of the reflected light detected by the optical head 11. The control section 20 will be described in detail later.

Next, with reference to Fig. 3, the optical disc 2 on which information is recorded by the optical disc device 1 is described schematically. The optical disc 2 includes, as shown in Fig. 3, a setting region (predetermined region) 41 and a user region 42. The setting region 41 is a region (i.e., a section) in which trial recording of information is carried out, and the user region 42 is a section in which information desired by a user is to be recorded. Also, the setting region 41 is a region (predetermined region) which stores a look-up table (a first group of recording parameters, a second group of recording parameters, recording parameters) described later.

Note that the position of the setting region 41 is not limited to the position illustrated in Fig. 3. The setting region 41 may exist in any position within the radius of the optical disc 2. Also, a plurality of setting regions 41 may be provided.

Next, the following operation is briefly described: operation for recording information on the optical disc 2 by using the optical disc device 1; and operation for reproducing, by using the optical disc device 1, information recorded on the optical disc 2.

The optical disc device 1 records information on the optical disc 2 as follows. Firstly, the control section 20 sets a recording parameter in accordance with the recording information. Secondly, the optical head 11 irradiates the setting region 41 on the optical disc 2 with a recording light beam (i.e., a light beam for recording), thereby recording the information in a track of the setting region 41 on the optical disc 2. The optical disc device 1 reproduces information recorded on the optical disc 2 as follows. Firstly, the control section 20 moves, by using the pickup driving circuit 13, the optical pickup 12 to a recorded section (on which the information is recorded) of either of the setting region 41 or the user region 42, each of which is provided on the optical disc 2.

Secondly, the control section 20 causes, by using the laser driving circuit 14, the optical head 11 to irradiate, with a reproducing light beam (i.e., a light beam for reproducing), a track of a recorded section (on which the information is recorded) on the optical disc 2; and light reflected from the track is detected by the optical head 11 and then converted into a reproduced signal by the reproducing circuit 15 and inputted to the control section 20. Thus, the optical disc device 1 reproduces the information recorded in the track on the optical disc 2. The recording information here means binary digital data recorded on the optical disc 2 (i.e., the information recording medium). The binary digital data is expressed by (i) two states including a state where a recording mark is formed on the optical disc 2 (i.e., a mark) and a state where a recording mark is not formed on the optical disc 2 (i.e., a space) and (ii) each length of the two states. That is, the followings are specified in the recording information: (i) the two states including the state where a recording mark is formed on the optical disc 2 (i.e., the mark) and the state where a recording mark is not formed on the optical disc 2 (i.e., the space); and (ii) each length of the two states (each of (i) and (ii) is set in a recording parameter).

The optical disc device 1 in accordance with the present embodiment firstly carries out recording (i.e., trial recording) on the setting region 41 on the optical disc 2 as described above, and then sets a recording parameter by using the control section 20 in accordance with a value of a reproduced signal obtained by reproduction of the information recorded in the trial recording. Then, the optical disc device 1 records the information in a track on the user region 42 in accordance with the recording parameter thus set. Recording operation with respect to the user region 42 after the optical disc device 1 sets the recording parameter is similar to recording operation which is commonly known. Therefore, the detailed description of the recording operation with respect to the user region 42 is omitted here. The recording parameter setting operation carried out by the control section 20 will be described later in detail in the description of the control section 20.

Ahead of the detailed descriptions of the control section 20 and the recording parameter setting operation carried out by the control section 20, a recording parameter is described with reference to Figs. 4 and 5. The description given here is based on (1, 7) RLL (Run Length Limited code) as one of the examples of a modulation method. Note that the modulation method is not limited to the (1, 7) RLL in the present embodiment. The (1, 7) RLL code is a code which limits a minimum value and a maximum value of an inversion interval in magnetic digital recording and optical digital recording.

In the (1, 7) RLL modulation method, a shortest recording mark of 2T has a pulse train of a recording pulse including a top section and a last section. A recording mark which is longer than the shortest recording mark has a pulse train of a recording pulse including the top section, the last section, and an intermediate section which is provided between the top section and the last section and whose length is determined in accordance with the mark length. This will be described in detail later. In other modulation methods, for example, the shortest recording mark may be 3T (e.g., a DVD-RW). In this case, a shortest recording mark may include a top section, an intermediate section, and a last section. In another case, a shortest recording mark may include a top section only (e.g., a DVD-R). The symbol "T" (predetermined unit recording mark length) herein represents a time equivalent to one cycle of a clock. For example, a 3T recording mark length indicates a recording region where a recording mark is formed in time equivalent to three cycles of the clock.

As illustrated in Fig. 4, a pulse train of a recording pulse corresponding to recording information is set in the optical disc 2 in consideration of a medium temperature distribution for carrying out recording. Fig. 4 shows a recording pulse corresponding to recording information, where the recording information is a recording mark length of 5T, for example. A pulse train of a recording pulse is expressed by time and recording pulse power. In Fig. 4, the horizontal axis indicates irradiation time, and the vertical axis indicates recording pulse power.

As described above, a pulse train includes a top section, a last section, and an intermediate section. As illustrated in Fig. 4, the top section here includes a top section rise position and a top pulse; the last section here includes a last pulse, a last section rise position, a cooling period, and a cooling end position; and the intermediate section here includes an intermediate pulse, an intermediate pulse rise position, and an intermediate period provided between the top pulse and the intermediate pulse, between intermediate pulses, and between the intermediate pulse and the last pulse.

As illustrated in Fig. 4, the pulse train is formed from recording power, space power, bias power, and cooling power. In the present embodiment, the recording power, the space power, the bias power, and the cooling power form a pulse train, and are termed "recording power parameter". These recording power parameters are included in the foregoing recording parameters. In Fig. 4, the recording power of the recording pulse of the top section, the recording power of the recording pulse of the intermediate section, and the recording power of the recording pulse of the last section are identical to each other. However, the present invention is not limited to this. The recording power of the top section, the recording power of the intermediate section, and the recording power of the last section may be different from each other. Also, in Fig. 4, the smallest power is the cooling power, the bias power, the space power, and the recording power, in this order. However, the present invention is not limited to this. Note that, it is preferable that the recording power of the recording pulse of either of the top section, the intermediate section or the last section has the highest value and the bias power or the cooling power has the lowest value.

Fig. 5 illustrates pulse train and recording pulse parameters for forming recording marks of recording mark lengths of 2T through 9T. Fig. 5 shows the following example: each of the recording marks of the recording mark lengths of 2T and 3T includes a top pulse and a cooling period, each of the recording marks of the recording mark length of 4T and 5T includes a top pulse, a last pulse, and a cooling period, and each of the recording marks of the recording mark lengths of 6T or longer includes a top pulse, an intermediate period, a last pulse, and a cooling period.

In Fig. 5, "dTtop" indicates a top section rise position at which a top pulse starts; "Ttop" indicates the width of a top pulse; "dTe" indicates a cooling end position at which a cooling period in a last section ends; "Tmp" indicates the width of an intermediate pulse; "dTmp" indicates an intermediate pulse rise position; "Tlp" indicates the width of a last pulse; and "dTlp" indicates a rise position of the last pulse (i.e., a last section rise position). Further, "dTe" indicates, as well as the cooling end position at which the cooling period in the last section ends, a start position of a space power "Ps" irradiation period, which subsequently starts following the cooling period.

Each of "dTtop", "dTmp", "dTe", and "dTlp" is set in accordance with time from a reference timing of a clock. Specifically, each of "dTtop", "dTmp", and "dTlp" is set in accordance with time based on a rise position of recording information corresponding to each recording mark length (i.e., a position at which the value changes from 0 to 1); and "dTe" is set in accordance with time based on a fall position of recording information corresponding to each recording mark length (i.e., a position at which the value changes from 1 to 0).

At this time, the same reference is used for all the recording mark lengths. In Fig. 5, "dTtop" is set in accordance with time based on the rise position of the recording information as described above. However, "dTtop" may be set in accordance with time based on a position that is shifted by a predetermined clock-interval from the rise position of the recording information. Similarly, in Fig. 5, "dTe" is set in accordance with time based on the fall position of the recording information as described above. However, "dTe" may be set in accordance with time based on a position that is shifted by a predetermined clock-interval from the fall position of the recording information. Also, "dTtop", "dTmp", "dTlp", and "dTe" may have different amount of shifting of the standard position from the rise position or the fall position of the recording information. In the present embodiment, "dTtop", "Ttop", "dTe", "Tlp", "dTlp", "Tmp" and "dTmp", each of which defines timing in a recording pulse, are termed "recording pulse parameter". These recording pulse parameters are included in the foregoing recording parameters.

In Fig. 5, "Ttop" defines the width of the top pulse. However, the period in which the top pulse is risen may also be expressed by setting a recording pulse parameter at the fall position of the top pulse. Similarly, "Tlp" defines the width of the last pulse. However, the period in which the last pulse is risen may also be expressed by setting a recording pulse parameter at the fall position of the last pulse. The same is true for the intermediate pulse.

Changing the value of a recording pulse parameter changes the shape of a recording mark to be formed. The shape of a front edge, at which a forming process of a recording mark starts, is changed by "dTtop" and "Ttop", by which a top section is formed. That is, the parameters "dTtop" and "Ttop" out of the recording pulse parameters are capable of controlling the heat of the front edge.

Also, the shape of a rear edge, at which a forming process of a recording mark ends, is changed by "dTe", "Tlp", and "dTlp", by which a last section is formed. That is, the parameters "dTe", "Tlp", and "dTlp" out of the recording pulse parameters are capable of controlling the heat of the rear edge. Further, "Tmp" and "dTmp" out of the recording pulse parameters change the amount of heat accumulated at the intermediate section. That is, "Tmp" and "dTmp" out of the recording pulse parameters are capable of controlling the shape of a recording mark in a range between the front edge and the rear edge.

The values of the recording parameters including the foregoing recording power parameters and the recording pulse parameters are stored in the setting region 41 in a form of a look-up table (i.e., a first group of recording parameters, a second group of recording parameters, recording parameters). The look-up table is read out by the optical disc device 1, and is stored (i.e., recorded) in a storage section 3. The storage section 3 may be any one of an information recording medium (such as a memory), a server, and the like. Also, the storage section 3 may be provided in the optical disc device 1, or may be connected externally to the optical disc device 1. The look-up table will be described in detail later.

Next, the following gives the detail description of how the control section 20 in the optical disc device 1 sets a recording parameter. Firstly, with reference to Fig. 1, the outline of the arrangement of the control section 20 is described. Fig. 1 is a functional block diagram illustrating the arrangement of the control section 20 of the present embodiment.

As shown in Fig. 1, the control section 20 includes a recording parameter setting section (i.e., a recording parameter setting device) 21. The recording parameter setting section 21 carries out the following functions of the control section 20: (i) the function for setting a recording parameter of a recording mark, which is information to be recorded on the optical disc 2; (ii) the function for causing, by using the laser driving circuit 14, the optical head 11 to irradiate a light beam; and (iii) the function for receiving, from the reproducing circuit 15, a reproduced signal obtained by the conversion of reflected light detected by the optical head 11. The recording parameter setting section 21 includes a recording information acquisition section 22, a trial recording parameter setting section (i.e., trial recording parameter setting means) 23, a trial recording instruction section 24, a reproduced signal acquisition section 25, a reproduced signal quality judging section (i.e., reproduced signal quality judging means) 26, and a recording instruction section 27. The recording parameter setting section 21 carries out the above-mentioned functions by using these sections.

The recording information acquisition section 22 acquires recording information to be recorded on the optical disc 2. The recording information may be acquired from any one of the followings: a control section which is upper-level than the control section 20, a memory storing the recording information, a server storing the recording information, and the like. Also, the acquisition source of the recording information may be included in the optical disc device 1, or may be externally connected to the optical disc device 1.

The trial recording parameter setting section 23 sets a trial recording parameter for trial recording operation such that (i) the trial recording parameter setting section 23 inquires the storage section 3 in accordance with the recording information thus obtained by the record information acquisition section 22 and (ii) the trial recording parameter setting section 23 obtains, out of the recording parameters defined in the look-up table in the storage section 3, a recording parameter corresponding to the recording information. Also, the trial recording parameter setting section 23 resets the trial recording parameter when the trial recording parameter setting section 23 receives, from the reproduced signal quality judging section 26 (described later), a command to reset the trial recording parameter for the trial recording operation (i.e., a trial recording parameter modification command). The resetting of the trial recording parameter will be described later.

The trial recording instruction section 24 instructs the pickup driving circuit 13 and the laser driving circuit 14 to carry out the trial recording on the setting region 41 on the optical disc 2 in accordance with the trial recording parameter thus set by the trial recording parameter setting section 23.

When the trial recording of the recording mark is carried out on the setting region 41 on the optical disc 2 in accordance with the instruction from the trial recording instruction section 24, a reproduced signal is generated. The reproduced signal acquisition section 25 acquires the reproduced signal from the reproducing circuit 15.

The reproduced signal quality judging section (reproduced signal quality judging means) 26 judges whether or not the trial recording parameter used in the trial recording is good, in accordance with the reproduced signal obtained by the reproduced signal acquisition section 25. This judgment depends on whether or not the reproduced signal obtained by the reproduced signal acquisition section 25 satisfies a predetermined reproduced signal quality. When the reproduced signal satisfies the predetermined reproduced signal quality, the reproduced signal quality judging section 26 determines (i.e., sets) the trial recording parameter used in the trial recording as the recording parameter, and transmits the recording parameter to the recording instruction section 27.

When the reproduced signal does not satisfy the predetermined reproduced signal quality, the reproduced signal quality judging section 26 judges whether or not the number of classifications in the look-up table looked up by the trial recording parameter setting section 23 is equal to or greater than a predetermined value. When the number of the classifications in the look-up table is not equal to or greater than the predetermined value, the reproduced signal quality judging section 26 transmits, to the trial recording parameter setting section 23, a trial recording parameter modification command to reset the trial recording parameter. At the same time, the reproduced signal quality judging section 26 resets the classification in the look-up table stored in the storage section 3 so as to make the classification more detailed.

When the number of classifications in the look-up table is equal to or greater than the predetermined value, the reproduced signal quality judging section 26 judges that an error occurs in the recording parameter setting operation. Then, the reproduced signal quality judging section 26 causes a display section (not illustrated) to display the error, and ends the recording parameter setting operation. The predetermined value will be described in detail later. The predetermined reproduced signal quality herein means: a reproduced signal quality which can be sufficiently compensated by an error modification function of a recording/ reproducing device (the optical disc device 1 in the present embodiment); and a value which is set arbitrary in consideration of a quality fluctuation which occurs due to mass production of a recording/reproducing device, an optical disc (the optical disc 2 in the present embodiment), and the like. For the reproduced signal quality, jitter, an error rate, or the like may be used. When every optical disc has different bottom-level specs in jitter, an error rate, or the like, a bottom-level value prescribed by the specs may be used as a predetermined reproduced signal quality.

The recording instruction section 27 instructs the pickup driving circuit 13 and the laser driving circuit 14 to carry out recording operation on the user region 42 on the optical disc 2, in accordance with the recording parameter transmitted by the reproduced signal quality judging section 26.

The following description deals with the recording parameter setting operation in the optical disc device 1 with reference to Figs. 6 through 11. Fig. 6 is a flow chart of the recording parameter setting operation in the present embodiment. Figs. 7 through 11 each is a view illustrating a look-up table in the present embodiment.

Firstly, in Step S1, the recording information acquisition section 22 acquires recording information to be recorded on the optical disc 2. Secondly, in Step S2, the trial recording parameter setting section 23 inquires the storage section 3 in accordance with the recording information thus acquired by the recording information acquisition section 22, so as to set a trial recording parameter. Specifically, the trial recording parameter setting section 23 looks up a look-up table such as in Fig. 7 and Fig. 11 in accordance with the recording information, obtains a recording parameter corresponding to the recording information, and then sets a trial recording parameter.

Fig. 7 shows a look-up table of "Tlp", which is a recording pulse parameter and indicates the width of a last pulse. The look-up table of "Tlp" is used as a look-up table (a second group of recording parameters) for controlling heat of a rear edge, at which a forming process of a recording mark ends. In the look-up table in Fig. 7, recording mark lengths of 4T or longer are classified into two groups, i.e., a group of odd mark lengths and a group of even mark lengths. When the recording mark length of the recording information does not reach 4T, a recording parameter set by default is set as the recording parameter. When the recording mark length of the recording information is equal to or longer than 4T, a value ("c4" and "c5" in Fig. 7) of a corresponding group in the look-up table is set as the recording parameter. For the default setting, for example, a value of "Ttop" may be set in advance.

Fig. 11 show a look-up table of "dTtop", which is a recording pulse parameter and indicates a top section rise position. The look-up table of "dTtop" is used as a look-up table (a first group of recording parameters) for controlling heat of a front edge, at which a forming process of a recording mark starts. In Fig. 11, recording mark lengths are classified into four groups: 2T, 3T, a group of odd mark lengths of 4T or longer, and a group of even mark length of 4T or longer. The present embodiment deals with a case where the number of classifications will not be changed in the trial recording carried out later. Therefore, the present embodiment deals with a case where the number of recording parameters for controlling the heat of the front edge will not increase any more.

However, before the present embodiment is described, the following description deals with, in more detail, a relationship between the total number of classifications in the look-up table (the first group of recording parameters) and the total number of classifications in the look-up table (the second group of recording parameters). Note that the following description also deals with a case where the number of classifications of the first group of recording parameters used for controlling heat of a front edge is changed.

The look-up table (hereinafter referred to as "first group of recording parameters") for controlling heat of a front edge is classified in accordance with an integral multiple of at least a predetermined unit recording mark length T out of the recording information, and classified so that recording mark lengths which fall in a range from a first predetermined recording mark length (4T) to a maximum recording mark length (9T) are classified into a group of odd mark lengths and a group of even mark lengths.

Meanwhile, the look-up table (hereinafter referred to as "second group of recording parameters") for controlling heat of a rear edge is classified in accordance with the integral multiple of the unit recording mark length T, and classified so that recording mark lengths which fall in a range from longer than a second predetermined recording mark length (any value which falls in a range from not less than 4T to not more than 7T) to the maximum recording mark length (9T) are classified into the group of odd mark lengths and the group of the even mark lengths.

Note that each of the first predetermined recording mark length and the second predetermined recording mark length indicates a range of the recording mark length in which a rear edge is supposed not to be affected by heat accumulated at a front edge of a recording mark, that is, in which the recording parameter of the rear edge is supposed to be controlled separately from the recording parameter of the front edge. Each of the first predetermined recording mark length and the second predetermined recording mark length is arbitrary set depending on the type of an information recording medium.

The relationship between the total number of classifications of the first group of recording parameters and the total number of classifications of the second group of recording parameters is expressed by the following equation.

The total number of classifications of the first group of recording parameters = the number of recording mark lengths which are shorter than the first predetermined recording mark length (two classifications (i.e. 2T and 3T) are obtained since the first predetermined mark length is 4T) + one classification (i.e. the group of odd mark lengths (5T, 7T, and 9T)) + one classification (i.e. the group of even mark lengths (4T, 6T, and 8T))

= the number of recording mark lengths which are shorter than the first predetermined recording mark length (two classifications) + two classifications

(Case where the following is satisfied: the first predetermined recording mark length = the second predetermined recording mark length = 4T)

the total number of classifications of the second group of recording parameters = the number of recording mark lengths which are shorter than the second predetermined recording mark length (two classifications (i.e. 2T and 3T) are obtained since the second predetermined recording mark length is 4T) + one classification (i.e. the second predetermined recording mark length (4T)) + one classification (the group of odd mark lengths (5T, 7T, and 9T)) + one classification (the group of even mark lengths (6T and 8T))

= the number of classifications which are shorter than the second predetermined recording mark length (two classifications) + three classifications

difference between (i) the total number of classifications of the first group of recording parameters and

(ii) the total number of classifications of the second group of recording parameters = one classification + the number of recording mark lengths which are shorter than the second predetermined recording mark length (two classifications) − the number of recording mark lengths which are shorter than the first predetermined recording mark length (two classifications) = one classification

(Case where the following is satisfied: the first predetermined recording mark length (4T) < the second predetermined recording mark length (any value which falls in a range from not less than 5T to not more than 7T))

the total number of classifications of the second group of recording parameters = the number of recording mark lengths which are shorter than the second predetermined recording mark length (not less than 3 classifications to not more than 5 classifications) + one classification (i.e. the second predetermined recording mark length (any value which falls in a range from not less than 5T to not more than 7T)) + one classification (i.e. the group of odd mark lengths (7T and 9T or 9T)) + one classification (i.e. the group of even mark lengths (6T and 8T or 8T))

= the number of recording mark lengths which are shorter than the second predetermined recording mark length (not less than 3 classifications to not more than 5 classifications) + three classifications

difference between (i) the total number of classifications of the first group of recording parameters and (ii) the total number of classifications of the second group of recording parameters = one classification + the number of recording mark lengths which are shorter than the second predetermined recording mark length (not less than 3 classifications to not more than 5 classifications) − the number of recording mark lengths which are shorter than the first predetermined recording mark length (two classifications)

$2 \leq$ difference between (i) the total number of classifications of the first group of recording parameters and (ii) the total number of classifications of the second group of recording parameters $\leq 4$

The above description reveals that the total number of classifications of the second group of recording parameters is larger than the total classifications of the first group of recording parameters by not less than one classification (in the present embodiment, the total number of classifications of the second group of recording parameters is larger than the total classifications of the first group of recording parameters by four classifications at maximum).

Note that the above description dealt with an example in which the value of the first predetermined recording mark length of the first group of recording parameters is fixed and the value of the second predetermined recording mark length is changed into a larger value.

However, the present invention is not limited to this. It is also possible that each of the first predetermined recording mark length and the second predetermined recording mark length is changed into a larger value. This increases (i) the number of classifications of the first group of the recording parameters out of the total number of classifications of the first group of recording parameters and the total number of classifications of the second group of recording parameters, and (ii) the number of classifications of the second group of recording parameters out of the total number of classifications of the first group of recording parameters and the total number of classifications of the second group of recording parameters. Note, however, that, in order to attain the effect of the present invention, it is necessary that the following be satisfied: the number of classifications of the first group of recording parameters < the number of classifications of the second group of recording parameters.

The first group of recording parameters may contain a single kind of recording parameter or may contain plural kinds of recording parameter. The second group of recording parameters may contain a single kind of recording parameter or may contain plural kinds of recording parameter. In a case where plural kinds of recording parameter exist, such plural kinds of recording parameter may be the same or may be different in the number of classification.

For example, in a case where the second group of recording parameters contain a single kind of recording parameter, i.e., a recording parameter of a last pulse width, a last section pulse of all of the second group of recording parameters can be optimized more accurately.

On the other hand, in a case where the second group of recording parameters contain plural kinds of recording parameter, i.e., a last section rise position, a last pulse width, and a cooling end position, optimization can be carried out while a balance in a pulse train is secured.

Note that the last section rise position, the last pulse width, and the cooling end position may be the same or may be different in the number of classifications. It is only necessary that the number of classifications of the second group of recording parameters is larger than the number of classifications of the first group of recording parameters.

The above description has dealt with a case where three kinds of recording parameters are used. However, two kinds of recording parameters may be used.

It goes without saying that the same is true for the first group of recording parameters.

As described above, each of the look-up tables in Fig. 7 and Fig. 11 is recorded on the setting region 41 on the disc. The optical disc device 1 reads out the look-up table, and stores the look-up table in the storage section 3. After that, the trial recording parameter setting section 23 looks up the look-up table in the storage section 3 so as to set a trial recording parameter. When "Tlp" is the width of a last pulse of a recording mark whose length is longer than 4T (i.e., 5T or longer), a value (i.e., "c4") for a recording mark length equal to 4T is set for the group of even mark lengths (6T and 8T) of "Tlp" by the trial recording parameter setting section 23. When "Tlp" is the width of a last pulse of a recording mark whose length is longer than 4T (i.e., 5T or longer), a value (i.e., "c5") for a recording mark length equal to 5T is set for the group of odd mark lengths (5T, 7T, 9T) of "dTlp" by the trial recording parameter setting section 23.

Also, when "dTtop" is a top section rise position of a recording mark whose length is longer than 4T (i.e., 5T or longer), a value (i.e., "d4") for a recording mark length of 4T is set for the group of even mark lengths (6T and 8T) of "dTtop" by the trial recording parameter setting section 23. When "dTtop" is a top section rise position of a recording mark whose length is longer than 4T (i.e., 5T or longer), a value (i.e., "d4") for a recording mark length of 4T is set for the group of odd mark lengths (5T, 7T, 9T) of "dTtop" by the trial recording parameter setting section 23. That is, the trial recording parameter setting section 23 sets the same value for a recording mark length of 4T and for the group of even mark lengths out of recording mark length of 5T or longer. The trial recording parameter setting section 23 sets the same value for a recording mark length of 5T and for the group of odd mark lengths out of recording mark length of 5T or longer. This shortens the read-out time, compared with a method in which a plurality of parameters are respectively set for recording mark lengths of 4T through 9T and the plurality of parameters are read out.

The trial recording parameter setting section 23 sets a certain value of the recording parameter in common for recording marks lengths of 4T, 6T, and 8T, and sets a certain value of the recording parameter in common for recording marks lengths of 5T, 7T, and 9T. When trial recording is carried out, the trial recording parameter setting section 23 gives a certain amount of change in common to the recording mark lengths of 4T, 6T, and 8T, and to the recording mark length of 5T, 7T, and 9T. That is, the value of the amount of change used in trial recording of a recording mark length of 4T is commonly used as the value of the amount of change used in trial recording of recording mark lengths of 4T, 6T, and 8T, and the value of the amount of change used in trial recording of a recording mark length of 5T is commonly used as the value of the amount of change used in trial recording of recording mark lengths of 5T, 7T, and 9T.

In Step S3, the trial recording instruction section 24 instructs the pickup driving circuit 13 and the laser driving circuit 14 to carry out trial recording on the setting region 41 on the optical disc 2 in accordance with the trial recording parameter thus set by the trial recording parameter setting section 23. Next, in Step S4, the pickup driving circuit 13 and the laser driving circuit 14 cause the optical head 11 to record the information onto the setting region on the optical disc 2 in accordance with the trial recording parameter. Then, in Step S5, the optical head 11 reproduces the information, and a reproduced signal is generated by the reproducing circuit 15.

In Step S6, the reproduced signal acquisition section 25 acquires the reproduced signal, and transmits the reproduced signal to the reproduced signal quality judging section 26. In Step S7, the reproduced signal quality judging section 26 judges whether or not the reproduced signal acquired by the reproduced signal acquisition section 25 satisfies a predetermined reproduced signal quality. If the reproduced signal satisfies the predetermined reproduced signal quality (i.e., "YES" in Step S7), the procedure proceeds to Step S8. If the reproduced signal does not satisfy the predetermined reproduced signal quality (i.e., "NO" in Step S7), the procedure proceeds to Step S9. Specifically, the judgment whether or not the reproduced signal satisfies the predetermined reproduced signal quality is carried out by observing whether or not jitter (as the predetermined reproduced signal quality) of both of the front edge and the rear edge satisfies a predetermined value (e.g., 7.0% or less).

In Step S8, the reproduced signal quality judging section 26 transmits, to the recording instruction section 27, the trial recording parameter used in the trial recording. This step sets (i.e., determines) the recording parameter for actually carrying out recording operation on the user section 42 on the optical disc 2. The recording parameter setting operation ends here.

In Step S9, the reproduced signal quality judging section 26 judges whether or not the number of classifications in the look-up table looked up by the trial recording parameter setting section 23 is equal to or greater than a predetermined value. If the number of classifications in the look-up table is equal to or greater than the predetermined value (i.e., "YES" in Step S9), the procedure proceeds to Step S10. If the number of classifications in the look-up table is not equal to or greater than the predetermined value (i.e., "NO" in Step S9), the procedure proceeds to Step S11.

The predetermined value is described below. For example, in the look-up table in Fig. 7, the number of classifications is two. In the present embodiment, the maximum recording mark length is 9T. When the recording mark lengths of 4T through 9T are classified separately, the number of classifications in the look-up table is six, which is the maximum value. In this case, in Step S9, when the reproduced signal quality judging section 26 judges that the number of classifications in the look-up table looked up by the trial recording parameter setting section 23 is seven, a contradiction occurs because the actual number of classifications in the look-up table in Fig. 7 is six at maximum. This means an error in the recording parameter setting operation.

Also, in Step S9, when the reproduced signal quality judging section 26 judges that the number of classifications in the look-up table looked up by the trial recording parameter setting section 23 is six, the number of classifications cannot be increased any more because the number of classifications judged by the reproduced signal quality judging section 26 is equal to the maximum number of classifications in the look-up table in Fig. 7. This also means an error in the recording parameter setting operation. Therefore, the present embodiment uses, as the foregoing predetermined value, the maximum number of classifications in the look-up table looked up by the trial recording parameter setting section 23. This makes it possible to detect an error in the recording parameter setting operation. Resetting the trial recording parameter used in the trial recording changes the look-up table looked up by the trial recording parameter setting section 23. The predetermined value changes in accordance with the maximum number of classifications in the look-up table which is changed when the look-up table changes as described above herein.

In Step S10, the reproduced signal quality judging section 26 causes a display section (not illustrated) to display an error so as to indicate that the recording parameter setting operation has an error. At the same time, the reproduced signal quality judging section 26 ends the recording parameter setting operation.

In Step S11, the reproduced signal quality judging section 26 transmits, to the trial recording parameter setting section 23, a trial recording parameter modification command to reset the trial recording parameter. Also, the reproduced signal quality judging section 26 resets the classification of the look-up table stored in the storage section 3 into more detailed groups. Specifically, a look-up table in which recording mark lengths of 4T or longer are classified into only two groups is modified to be a look-up table (as shown in Fig. 8) in which recording mark lengths of 4T or longer are classified into three groups: 4T, a group of odd mark lengths of 5T or longer, and a group of even mark lengths of 5T or longer. Then, the look-up table thus modified is set in the trial recording parameter setting section 23.

This makes it possible to carry out the trial recording by separately controlling setting values of trial recording parameters of a recording mark length of 4T, the group of odd mark lengths of 5T or longer, and the group of even mark lengths of 5T or longer. After the trial recording parameter setting section 23 receives the trial recording parameter modification command, the trial recording parameter setting section 23 inquires the storage section 3 again. Then, the trial recording parameter setting section 23 obtains a recording parameter corresponding to the recording information from among the recording parameters defined in the look-up table in Fig. 8, so as to reset the trial recording parameter used in the trial recording operation.

Here, the same value is set for recording mark lengths of 5T, 7T, and 9T. Also, the same amount of change is given to recording mark lengths of 5T, 7T, and 9T when the trial recording is carried out. That is, the value for a recording mark length of 5T is used commonly for recording mark lengths of 5T, 7T, and 9T. Further, the same value is set for recording mark lengths of 6T and 8T. Also, the same amount of change is given to recording mark length of 6T and 8T. That is, the value for a recording mark length of 6T is used commonly for recording mark length of 6T and 8T. After the look-up table is changed, the procedure returns to Step S2 and carries out the operation flow thereafter. Every time the procedure returns to Step S2 and the operation flow is carried out again, the classification of the look-up table stored in the storage section 3 is reset into more detailed groups as described above.

Specifically, after the look-up table illustrated in Fig. 8 is used, the look-up table classified to have four groups of 4T, 5T, a group of odd mark lengths of 6T or longer, and a group of even mark lengths of 6T or longer (as illustrated in Fig. 9) is used. Further, after the look-up table illustrated in Fig. 9 is used, the look-up table classified to have five groups of 4T, 5T, 6T, a group of odd mark lengths of 7T or longer, and a group of even mark lengths of 7T or longer (i.e., 8T) (as illustrated in Fig. 10) is used. Thus, the classification of the look-up table is reset into more detailed groups by stages.

In the present embodiment, recording mark lengths of 4T or longer (i.e., a predetermined recording mark length or longer) are classified into two groups (i.e., a group of odd mark lengths and a group of even mark lengths) both in (i) a look-up table for controlling heat of a front edge and (ii) a look-up table for controlling heat of a rear edge, both of the look-up tables of (i) and (ii) being stored in the storage section 3 at the time of starting the trial recording operation. However, the present invention is not limited to this. For example, out of the look-up table for controlling heat of a front edge and the look-up table for controlling heat of a rear edge each of which is stored in the storage section 3 at the time of starting the trial recording operation, it is preferable that the look-up table for controlling heat of a rear edge is classified to have more detailed groups than the look-up table for controlling heat of a front edge.

Also, out of the look-up table for controlling heat of a front edge and the look-up table for controlling heat of a rear edge, the look-up table for controlling heat of a rear edge may be recorded on the setting region 41 on the optical disc 2 as a table classified to have more detailed groups than the look-up table for controlling heat of a front edge. In this case, when the look-up table is read out by the optical disc device 1 and stored (i.e., recorded) in the storage section 3, the look-up table for controlling heat of a rear edge (out of the look-up table for controlling heat of a front edge and the look-up table for controlling heat of a rear edge each of which is stored in the storage section 3 at the time of starting the trial recording operation) is classified to have more detailed groups than the look-up table for controlling heat of a front edge.

That is, the following look-up tables are included: (i) the look-up table for controlling heat of a front edge, in which look-up table recording marks whose lengths fall in a range from a predetermined recording mark length to the maximum recording mark length are classified into the two groups i.e., a group of odd mark lengths and a group of even mark length; (ii) the look-up table for controlling heat of a rear edge, in which look-up table recording marks whose lengths fall in a range from longer than the predetermined recording mark length to the maximum recording mark length is classified into two groups i.e., a group of odd mark lengths and a group of even mark length (i.e., a recording mark whose length is equal to the predetermined recording mark length and a recording mark whose length is longer than the predetermined recording mark length are separated and then recording marks whose lengths are longer than the predetermined mark length are further classified into two groups, i.e., a group of odd mark lengths and a group of even mark lengths).

This allows the recording parameters for controlling heat of a rear edge of a recording mark to be classified into more detailed groups than the recording parameters for controlling heat of a front edge of a recording mark. Also, this reduces the number of recording parameters, compared with a method in which the recording parameters of both of a front edge and a rear edge are classified into the increased number of groups. A rear edge of a recording mark is more apt to be affected by heat than any other regions in the recording mark. Therefore, classifying a look-up table for controlling heat of a rear edge into more detailed groups allows to more strictly control heat of a rear edge, at which a forming process of a recording mark ends. This compensates the effect caused by accumulated heat, thereby forming a recording mark capable of providing a good reproduced signal quality.

The present embodiment is arranged such that a look-up table stored in the storage section 3 is set to have more detailed groups when a trial recording parameter is reset. However, the present invention is not limited to this. For example, the following is also possible: The storage section 3 stores, in advance, a plurality of look-up tables having different number of classifications (e.g., the storage section 3 stores, in advance, all of the look-up tables illustrated in Fig. 7, Fig. 8, Fig. 9, and Fig. 10); then, the trial recording parameter setting section 23 switches the look-up table to look up to another look-up table when the trial recording parameter is reset.

For example, there is a case where the look-up table illustrated in Fig. 10 is used as a look-up table of a recording parameter which is conclusively determined for a last pulse width "Tlp". In this case, "Tlp" (i.e., a recording parameter for controlling heat of a rear edge of a recording mark) is set so that recording mark lengths of 4T or longer are classified into groups of 4T, 5T, 6T, 8T and a group of even mark lengths of 7T or longer (i.e., 7T and 9T) as illustrated in Fig. 10. On the other hand, "dTtop" (i.e., a recording parameter for controlling heat of a front edge of a recording mark) is not reset by trial recording. Therefore, "dTtop" maintains the setting in Step S2 so that recording mark lengths are classified into four groups of 2T, 3T, a group of odd mark lengths of 4T or longer, and a group of even mark lengths of 4T or longer as illustrated in Fig. 11.

When a look-up table is recorded on the setting region 41 on the optical disc 2, a value corresponding to a recording mark length is recorded for, for example, the recording pulse parameters "dTtop" and "Tlp". Specifically, the values for the recording pulse parameters "dTtop" and "Tlp" as illustrated in Fig. 13 (a) and Fig. 13 (b) are recorded on the setting region 41.

As is clear from Fig. 13 (a), the recording pulse parameter "dTtop" is classified and allocated to four regions of 2T, 3T, a group of odd mark lengths of 4T or longer, and a group of even mark lengths of 4T or longer. On the other hand, as is clear from Fig. 13 (b), the recording pulse parameter "Tlp" is classified and allocated to three regions of 4T, a group of odd mark lengths of 5T or longer, and a group of even mark lengths of 5T or longer. That is, the regions for storing the values of the recording pulse parameter "dTtop" are allocated in accordance with the recording mark length, and two regions are allocated for storing the value of the recording pulse parameter for a recording mark length equal to or longer than a predetermined recording mark length (i.e., 4T or longer in Fig. 13 (a)). Also, the regions for storing the values of the recording pulse parameter "Tlp" are allocated in accordance with the recording mark length, and two regions are allocated for storing the value of the recording pulse parameter for a recording mark length equal to or longer than a predetermined recording mark length (i.e., 5T or longer in Fig. 13 (b)).

As described above, in a case where a look-up table is recorded on the setting region 41 on the optical disc 2, a look-up table for controlling heat of a rear edge so as to form the rear edge is classified to have more detailed groups than a look-up table for controlling heat of a front edge so as to form the front edge. That is, an operation effect of the present invention is attained by reading out a look-up table from the setting region 41 on the optical disc 2.

Note that the value in a look-up table to be recorded on the setting region 41 on the optical disc 2 may be a value that is recorded by the foregoing trial writing, or may be a value that is recorded as pre-stored information when various kinds of settings are carried out before shipment.

Next, an operation effect of the present invention is described with reference to Fig. 12. Fig. 12 is a table illustrating a correlation between a classification level of a look-up table and jitter in a reproduced signal generated by a recording mark.

In Condition 1, a recording parameter of a last pulse width "Tlp" uses the look-up table in Fig. 7. (In the look-up table in Fig. 7, recording parameters are classified into a group of odd mark lengths and a group of even mark lengths for a recording mark length of 4T or longer.) In Condition 2, a recording parameter of a last pulse fall position "dTlp" uses the look-up table in Fig. 8. (In the look-up table in Fig. 8, recording parameters are classified into a group of odd mark lengths and a group of even mark lengths for a recording mark length of 4T, and 5T or longer.) In Condition 3, a recording parameter of a last pulse fall position "dTlp" uses the look-up table in Fig. 9. (In the look-up table in Fig. 9, recording parameters are classified into a group of odd mark lengths and a group of even mark lengths for a recording mark length of 4T, 5T, and 6T or longer.) For example, when a predetermined reproduced signal quality is "jitter of both of the front edge and the rear edge of the recording mark is 7.0% or less", as is clear from Fig. 12, only Conditions 3 and 4 can satisfy the predetermined reproduced signal quality. That is, if recording mark lengths are classified into too small number of groups so as to reduce the number of recording parameters, some conditions (such as Condition 1 and Condition 2, in this case) cannot satisfy the predetermined reproduced signal quality. In view of this, in the present invention, when the look-up table of Condition 1 cannot satisfy the predetermined reproduced signal quality, the look-up table of Condition 2 is used. Thus, a look-up table can be reset and classified minutely to have more detailed groups until the predetermined reproduced signal quality is satisfied. Note that the predetermined reproduced signal quality is not limited to "jitter of both of the front edge and the rear edge of the recording mark is 7.0% or less". The predetermined reproduced signal quality herein means a level where an error in a reproduced signal can be corrected by the optical disc device 1. The predetermined reproduced signal quality only needs to be capable of ensuring allowance for a quality fluctuation in the optical disc device 1 or the optical disc 2 which occurs due to mass production or the other reasons. When the predetermined reproduced signal quality is, for example, "jitter of both of the front edge and the rear edge of the recording mark (both jitter) is 7.0% or less", as is clear from Fig. 12, Conditions 2, 3, and 4 satisfy the predetermined reproduced signal quality.

As described above, such a look-up table is included that defines a recording parameter for controlling heat of at least a rear edge of a recording mark. The look-up table is classified in accordance with at least mark lengths out of the recording information. In the look-up table, the mark lengths equal to or longer than a predetermined mark length are classified into the same group. Trial recording is carried out by using a trial recording parameter which is set in accordance with the look-up table, and then the trial recording is reproduced. If the trial recording does not satisfy a predetermined reproduced signal quality, the look-up table for the mark lengths equal to or longer than the predetermined mark length is further classified into more detailed groups in accordance with the mark length. After that, trial recording is carried out and then reproduced, so that a look-up table which satisfies the predetermined reproduced signal quality is determined. This reduces, as much as possible, the number of recording parameters to be used, and controls heat of a rear edge at which a forming process of a recording mark ends. This compensates an effect caused by accumulated heat, thereby forming a recording mark capable of providing a good reproduced signal quality (i.e., a recording mark satisfying the predetermined reproduced signal quality).

A rear edge of a recording mark is more apt to be affected by heat than any other regions in the recording mark such as a front edge. Therefore, when a recording mark equal to or longer than a predetermined recording mark length is formed, simply controlling heat of a rear edge forms a recording mark capable of providing a good reproduced signal quality. That is, setting a recording parameter for controlling heat of at least a rear edge in accordance with the present invention makes it possible to form a recording mark capable of surely providing a good reproduced signal quality.

In an arrangement where a look-up table fixed in advance is used, when a recording condition of a track on the optical disc 2 changes along with the lapse of time, the look-up table cannot be changed accordingly so as to suit the change in the recording condition of the track. This may unable to form a recording mark capable of providing a good reproduced signal quality (i.e., a recording mark satisfying the predetermined reproduced signal quality) in a case where the recording condition of the track changes. In view of this, the present invention has an arrangement where a look-up table is further classified depending on the result of trial recording. Therefore, even when the recording condition of the track on the optical disc 2 changes along with the lapse of time, the look-up table can be classified again so as to suit the change in the recording condition of the track. That is, even when the recording condition of the track changes along with the lapse of time, a recording mark capable of providing a good reproduced signal quality (i.e., a recording mark satisfying the predetermined reproduced signal quality) can be formed.

The arrangement described below is also possible. After a look-up table of a recording parameter is set, the look-up table is recorded on the setting region 41 on the optical disc 2. When another recording operation is carried out later, the look-up table recorded on the setting region 41 is read out by the optical disc device 1, and the look-up table thus read out is used again so as to set a recording parameter. For example, when the look-up table in Fig. 10 is determined as a look-up table of a recording parameter of a last pulse width "Tlp", information indicative of this is recorded on the setting region 41 on the optical disc 2. This allows the optical disc device 1 to read out, from the setting region 41, the information contained in the look-up table in Fig. 10, and to use the information for the purpose of setting a recording pulse parameter "Tlp" when another recording operation is carried out later.

With the foregoing arrangement, after a look-up table of a recording parameter is set in advance by carrying out trial recording, the look-up table can be used as a look-up table of a trial recording parameter in another recording operation. This makes it possible to reduce the number of trial recording carried out repeatedly until a recording parameter is determined. In addition, this eliminates the necessity of adding a new recording device such as a memory. This is because the setting region 41 on the optical disc 2 stores a look-up table of a recording parameter after the look-up table is set.

In the present embodiment, a recording parameter is used in a form of a table (i.e., a look-up table). However, the present invention is not limited to this. Recording parameters may be gathered into a group and stored in a storage section.

The classification in the look-up table of the present embodiment starts from a mark having a shorter length and is carried out in steps. However, the present invention is not limited to this, although a recording mark having a shorter length appears more frequently in data to be recorded on the user region 42. In trial recording, the data to be recorded on the user region 42 is not necessarily used as it is. Using data which is randomly selected gives an advantage such that a good reproduced signal quality can be achieved easily when recording marks are classified in steps from a recording mark having a shorter length. Also, classifying recording mark lengths in steps from a recording mark having a shorter length allows the number of classifications of recording parameters to be a number just needed to satisfy a predetermined reproduced signal quality. That is, this gives an advantage such that the number of recording parameters in a look-up table is easily set to a number just needed to satisfy a predetermined reproduced signal quality.

In the present embodiment, a recording mark length is used as recording information to be classified in a look-up table. However, the present invention is not limited to this. For example, both of a recording mark length and a space length may be classified as recording information in a look-up table. In this case, if the classification of a space length is not changed and only the classification of a recording mark length is changed, the number of recording parameters can be reduced as in the present embodiment.

In the present embodiment, a last pulse width "Tlp" is described as one of the examples of a look-up table. However, the present invention may use a look-up table of "dTlp" (representing a last pulse rise position) or "dTe" (representing a cooling end position at which a cooling period ends) instead of "dT1p" so as to obtain a similar effect. This is because heat of a rear edge of a recording mark can also be controlled by using either of the look-up table of "dTlp" or "dTe". In this case, in a case where the position of "dTlp" is shifted in a time proceeding direction, a rear edge of a recording mark is shifted in the time proceeding direction, whereas in a case where the position of "dT1p" is shifted in an opposite direction to a time proceeding direction, the rear edge of the recording mark is shifted in the opposite direction to the time proceeding direction. Similarly, in a case where the position of "dTe" is shifted in a time proceeding direction, a rear edge of a recording mark is shifted in the time proceeding direction, whereas in a case where the position of "dTe" is shifted in an opposite direction to a time proceeding direction, the rear edge of the recording mark is shifted in the opposite direction to the time proceeding direction.

In the present embodiment, a top section rise position "dTtop" is used as a recording parameter for controlling heat of a front edge. However, the present invention is not limited to this. A top pulse width "Ttop" may be used as a recording parameter instead of "dTtop".

Also, the present embodiment has an arrangement where a recording parameter for controlling heat of a front edge is not reset by trial recording. However, the present invention is not limited to this. For example, the present invention may have an arrangement where a recording parameter for controlling heat of a front edge is reset by trial recording, as well as a recording parameter for controlling heat of a rear edge. In this case, the recording parameter for controlling the heat of the front edge may be reset in a similar manner to the manner in which the recording parameter for controlling the heat of the rear edge is reset.

In the present embodiment, the following two steps are carried out in the recording parameter setting section 21: (i) a step for classifying recording parameters used for controlling heat of a front edge into a group of odd mark lengths and a group of even mark lengths if the recording mark length falls in a range from a predetermined recording mark length to the maximum recording mark length (first group of recording parameters classifying step, trial recording parameter setting step; a first step); (ii) a step for classifying, in accordance with at least recording mark lengths out of the recording information, recording parameters used for controlling heat of a rear edge and further classifying the recording parameters used for controlling the heat of the rear edge into a group of odd mark lengths and a group of even mark lengths if the recording mark length falls in a range from longer than the predetermined recording mark length to the maximum recording mark length (second group of recording parameters classifying step, trial recording parameter setting step; a second step). However, the present invention may have an arrangement which uses different means from these steps, provided that the means is equivalent to each of the steps (i.e., the first group of recording parameters classifying step and the second group of recording parameters classifying step, the trial recording parameter setting step; the first step and the second step).

In the present embodiment, the predetermined mark length is 4T in the look-up table used in the first trial recording. However, the present invention is not limited to this. The value of the predetermined recording mark length may be any positive integral number provided that the number is equal to or greater than 4T. The description "the predetermined recording mark length" herein indicates a range of the recording mark length in which a rear edge is supposed not to be affected by heat accumulated at a front edge of a recording mark, that is, in which the recording parameter of the rear edge is supposed to be controlled separately from the recording parameter of the front edge. The predetermined recording mark length is arbitrary set depending on the type of an information recording medium (i.e., the optical disc 2 in the present embodiment).

In the present embodiment, jitter is used as an example for judging a reproduced signal quality of trial recording. However, the present invention is not limited to this. For example, an error rate or the like may be used for judging a reproduced signal quality. Any index may be used as far as the index can judge the reproduced signal quality of trial recording.

The present embodiment uses (1, 7) RLL code as a run-length limitation code of d=1. However, the present invention is not limited to this. Other modulation methods or other codes may be used.

The present embodiment uses the optical disc device 1 which uses a light modulation recording method. However, the present invention is not limited to this. An optical disc device which uses a magneto-optical modulation method may be used as an alternative. Further, the present embodiment uses the optical disc device 1 as an example of a recording/reproducing device. However, the present invention is not limited to this. The device only needs to record information by heating the surface of an information recording medium so as to change the physical characteristics of the information recording medium. For example, a magnetic recording device or a magneto-optical disc device may be used as well as the optical disc device 1.

The present invention is not limited to the description of the embodiments above, but may be altered by a skilled person within the scope of the claims. An embodiment based on a proper combination of technical means disclosed in different embodiments is encompassed in the technical scope of the present invention.

Finally, the blocks of the optical disc device 1, especially the sections and the processing steps of the recording parameter setting section 21 may be realized by way of hardware or software as executed by a CPU as follows.

The optical disc device 1 (the recording parameter setting section 21) includes a CPU (central processing unit) and memory devices (memory media). The CPU (central processing unit) executes instructions in control programs realizing the functions. The memory devices include a ROM (read only memory) which contains programs, a RAM (random access memory) to which the programs are loaded, and a memory containing the programs and various data. The objective of the present invention can also be achieved by mounting to the optical disc device 1 (the recording parameter setting section 21) a computer-readable storage medium containing control program code (executable program, intermediate code program, or source program) for the optical disc device 1 (the recording parameter setting section 21), which is software realizing the aforementioned functions, in order for the computer (or CPU, MPU) to retrieve and execute the program code contained in the storage medium.

The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The optical disc device 1 may be arranged to be connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth, 802.11 wireless, HDR, mobile telephone network, satellite line, or terrestrial digital network. The present invention encompasses a computer data signal embedded in a carrier wave in which the program code is embodied electronically.

A recording parameter setting device of the present invention configured to set a recording parameter for forming a recording mark on an information recording medium in accordance with recording information may be arranged such that the recording parameters include: (a) recording parameters used for controlling heat of a front edge of the recording mark, classified at least in accordance with recording mark lengths out of the recording information, wherein recording parameters for recording mark lengths which fall in a range from a predetermined recording mark length to a maximum recording mark length are classified into a group of recording parameters for odd mark lengths and a group of recording parameters for even mark lengths; and (b) recording parameters used for controlling heat of a rear edge of the recording mark classified in accordance with the recording mark lengths out of the recording information, wherein recording parameters for recording mark lengths which fall in a range from longer than the predetermined recording mark length to the maximum recording mark length are classified into a group of recording parameters for odd mark lengths and a group of recording parameters for even mark lengths.

An information recording medium of the present invention configured to store, in a predetermined region, recording parameters for forming a recording mark in accordance with recording information may be arranged such that the recording parameters include: (a) recording parameters used for controlling heat of a front edge of the recording mark classified at least in accordance with recording mark lengths out of the recording information, wherein recording parameters for recording mark lengths which fall in a range from a predetermined recording mark length to a maximum recording mark length are classified into a group of recording parameters for odd mark lengths and a group of recording parameters for even mark lengths; and (b) recording parameters used for controlling heat of a rear edge of the recording mark classified at least in accordance with the recording mark lengths out of the recording information, wherein recording parameters for recording mark lengths which fall in a range from longer than the predetermined recording mark length to the maximum recording mark length are classified into a group of recording parameters for odd mark lengths and a group of recording parameters for even mark lengths.

A recording parameter setting device of the present invention configured to set a recording parameter for forming a recording mark on an information recording medium in accordance with recording information, may be arranged so as to include: (i) trial recording parameter setting means configured to inquire, in accordance with the recording information, a storage section storing recording parameters used for controlling heat of recording marks, and to set a trial recording parameter for carrying out trial recording, wherein the recording parameters are used for controlling heat of at least rear edges of the recording marks at which rear edges a forming process of the recording marks ends, the recording parameters are classified at least in accordance with recording mark lengths out of the recording information, wherein recording parameters for recording mark lengths which fall in a range from a predetermined recording mark length to a maximum recording mark length are classified into a group of recording parameters for odd mark lengths and a group of recording parameters for even mark lengths; and (ii) reproduced signal quality judging means configured to perform reproduced signal quality judgment, wherein, if a reproduced signal obtained by reproduction of the trial recording carried out in accordance with the trial recording parameter does not satisfy a predetermined reproduced signal quality, the reproduced signal quality judging means further classifies the recording parameters for the recording mark lengths equal to or longer than the predetermined recording mark length into more detailed groups and causes to carry out the trial recording again, and if the reproduced signal satisfies the predetermined reproduced signal quality, the reproduced signal quality judging means sets the trial recording parameter as the recording parameter.

The recording parameter setting device of the present invention may be arranged such that the reproduced signal quality judging means further classifies the recording parameters for the recording mark lengths equal to or longer than the predetermined recording mark length into (a) a group of recording parameters for the recording mark length equal to the predetermined recording mark length and (b) another group of recording parameters for the recording mark length longer than the predetermined recording mark length, if the reproduced signal does not satisfy the predetermined reproduced signal quality.

A recording parameter setting method of the present invention for setting a recording parameter for forming a recording mark on an information recording medium in accordance with recording information, may includes the steps of: (a) classifying, at least in accordance with recording mark lengths out of the recording information, recording parameters used for controlling heat of a front edge of the recording mark, wherein recording parameters for recording mark lengths which fall in a range from a predetermined recording mark length to a maximum recording mark length are classified into a group of recording parameters for odd mark lengths and a group of recording parameters for even mark lengths; and (b) classifying, at least in accordance with recording mark lengths out of the recording information, recording parameters used for controlling heat of a rear edge of the recording mark, wherein recording parameters for recording mark lengths which fall in a range from longer than the predetermined recording mark length to the maximum recording mark length are classified into a group of recording parameters for odd mark lengths and a group of recording parameters for even mark lengths.

A recording parameter setting method of the present invention for setting a recording parameter for forming a recording mark on an information recording medium in accordance with recording information, may include: (a) inquiring, in accordance with the recording information, a storage section storing recording parameters used for controlling heat of recording marks, and setting a trial recording parameter for carrying out trial recording, wherein the recording parameters are used for controlling heat of at least rear edges of the recording marks at which rear edges a forming process of the recording marks ends, the recording parameters are classified at least in accordance with recording mark lengths out of the recording information, wherein recording parameters for recording mark lengths which fall in a range from a predetermined recording mark length to a maximum recording mark length are classified into a group of recording parameters for odd mark lengths and a group of recording parameters for even mark lengths; and (b) performing reproduced signal judgment, wherein, if a reproduced signal obtained by reproduction of the trial recording carried out in accordance with the trial recording parameter does not satisfy a predetermined reproduced signal quality, the recording parameters for the recording mark lengths equal to or longer than the predetermined recording mark length are further classified into more detailed groups and the trial recording is caused to be carried out again, and if the reproduced signal satisfies the predetermined reproduced signal quality, the trial recording parameter is as the recording parameter.

This allows the recording parameters for controlling heat of a rear edge of a recording mark to be classified into more detailed groups than the recording parameters for controlling heat of a front edge of a recording mark. Also, this reduces the number of recording parameters, compared with a method in which the recording parameters of both of a front edge and a rear edge are classified into the increased number of groups. A rear edge of a recording mark is more apt to be affected by heat than any other regions in the recording mark. Therefore, classifying the recording parameters for controlling heat of a rear edge into more detailed groups allows to more strictly control heat of a rear edge, at which a forming process of a recording mark ends. This compensates the effect caused by accumulated heat, thereby forming a recording mark capable of providing a good reproduced signal quality.

As a result, it is possible to form a recording mark capable of more surely providing a good reproduced signal quality while the number of recording parameters to be used is reduced.

The recording parameter setting device of the present invention may be arranged such that the recording parameter for controlling the heat of the rear edge of the recording mark is a last pulse width of a pulse train for forming the recording mark.

According to the arrangement, in which a last pulse width of a pulse train for forming the recording mark is the recording parameter for controlling the heat of the rear edge, it is possible to form a recording mark capable of more surely providing a good reproduced signal quality while the number of recording parameters to be used is reduced.

The recording parameter setting device of the present invention may be arranged such that the recording parameter for controlling the heat of the rear edge of the recording mark is a last section rise position of a pulse train for forming the recording mark.

According to the arrangement, in which a last section rise position of a pulse train for forming the recording mark is the recording parameter for controlling the heat of the rear edge, it is possible to form a recording mark capable of more surely providing a good reproduced signal quality while the number of recording parameters to be used is reduced.

The recording parameter setting device of the present invention may be arranged such that the recording parameter for controlling the heat of the rear edge of the recording mark is a cooling end position at which a cooling period ends in a pulse train for forming the recording mark.

According to the arrangement, in which a cooling end position at which a cooling period ends in a pulse train for forming the recording mark is the recording parameter for controlling the heat of the rear edge, it is possible to form a recording mark capable of more surely providing a good reproduced signal quality while the number of recording parameters to be used is reduced.

The recording parameter setting device of the present invention may be arranged such that the recording parameter for controlling the heat of the front edge of the recording mark is a top section rise position of a pulse train for forming the recording mark.

According to the arrangement, in which a top section rise position of a pulse train for forming the recording mark is the recording parameter for controlling the heat of the front edge, it is possible to form a recording mark capable of more surely providing a good reproduced signal quality while the number of recording parameters to be used is reduced.

The recording parameter setting device of the present invention may be arranged such that the recording parameter for controlling the heat of the front edge of the recording mark is a top pulse width of a pulse train for forming the recording mark.

According to the arrangement, in which a top pulse width of a pulse train for forming the recording mark is the recording parameter for controlling the heat of the front edge, it is possible to form a recording mark capable of more surely providing a good reproduced signal quality while the number of recording parameters to be used is reduced.

The recording parameter setting device may be arranged such that the predetermined recording mark length is equal to or longer than 4T.

This allows a reduction in accumulated heat of a rear edge of a recording mark if the recording mark has a recording mark length in which a rear edge is supposed not to be affected by heat accumulated at a front edge of a recording mark, that is, in which the recording parameter of the rear edge is supposed to be controlled separately from the recording parameter of the front edge. Therefore, it is possible to form a recording mark capable of more surely providing a good reproduced signal quality while the number of recording parameters to be used is minimized.

As described above, according to the present invention, the process of determining the recording parameter which satisfies the predetermined reproduced signal quality proceeds while the number of classifications of recording parameters is being increased. This makes it possible to further reduce the number of classifications of recording parameters in a case where the recording parameter satisfying the predetermined reproduced signal quality is determined. At least a recording parameter for controlling heat of a rear edge is determined so as to satisfy the predetermined reproduced signal quality. This compensates the effect caused by the heat accumulated at the rear edge, thereby forming a recording mark capable of providing a good reproduced signal quality. This makes it possible to form a recording mark capable of more surely providing a good reproduced signal quality while the number of recording parameters to be used is reduced.

A recording parameter setting device of the present invention configured to set recording parameters for forming a recording mark on an information recording medium in accordance with recording information, may be arranged such that the recording parameters include: a first group of recording parameters used for controlling heat of a front edge of the recording mark; and a second group of recording parameters used for controlling heat of a rear edge of the recording mark, the first group of recording parameters being classified at least in accordance with an integral multiple of a predetermined unit recording mark length out of the recording information, wherein recording parameters for recording mark lengths which fall in a range from a first predetermined recording mark length to a maximum recording mark length are classified into a group of recording parameters for odd mark lengths and a group of recording parameters for even mark lengths, the second group of recording parameters being classified in accordance with the integral multiple of the predetermined unit recording mark length wherein recording parameters for recording mark lengths which fall in a range from longer than a second predetermined recording mark length to the maximum recording mark length are classified into a group of recording parameters for odd mark lengths and a group of recording parameters for even mark lengths, the second predetermined recording mark length being equal to or longer than the first predetermined recording mark length.

In addition to the above arrangement, the recording parameter setting device of the present invention is preferably arranged such that the cording parameters belonging to the second group are classified so that (i) recording parameters for recording mark lengths equal to or longer than the second predetermined recording mark length are classified into (a) a group of recording parameters for the recording mark length equal to the second predetermined recording mark length and (b) another group of recording parameters for the recording mark lengths longer than the second predetermined recording mark length, and (ii) the recording parameters for the recording mark lengths longer than the second predetermined recording mark length are classified into the group of recording parameters for odd mark lengths and the group of recording parameters for even mark lengths.

A recording parameter setting method of the present invention for setting recording parameters for forming a recording mark on an information recording medium in accordance with recording information, may be arranged such that the recording parameters include: a first group of recording parameters used for controlling heat of a front edge of the recording mark; and a second group of recording parameters used for controlling heat of a rear edge of the recording mark, the recording parameter setting method including the steps of: (a) classifying the first group of recording parameters at least in accordance with an integral multiple of a predetermined unit recording mark length out of the recording information, wherein recording parameters for recording mark lengths which fall in a range from a first predetermined recording mark length to a maximum recording mark length are classified into a group of recording parameters for odd mark lengths and a group of recording parameters for even mark lengths, (b) classifying the second group of recording parameters in accordance with the integral multiple of the predetermined unit recording mark length wherein recording parameters for recording mark lengths which fall in a range from longer than a second predetermined recording mark length to the maximum recording mark length are classified into a group of recording parameters for odd mark lengths and a group of recording parameters for even mark lengths, the second predetermined recording mark length being equal to or longer than the first predetermined recording mark length.

According to the arrangement or the method, the recording parameter setting device sets a recording parameter for forming a recording mark on an information recording medium in accordance with recording information.

The recording information here means binary digital data recorded on an information recording medium described below. The binary digital data is expressed by (i) two states including a state where a recording mark is formed on the information recording medium (i.e., a mark) and a state where a recording mark is not formed (i.e., a space) and (ii) each length of the two states. That is, the followings are specified in the recording information: (i) the two states including the state where a recording mark is formed on the information recording medium (i.e., the mark) and the state where a recording mark is not formed (i.e., the space); and (ii) each length of the two states (each of (i) and (ii) is set in a recording parameter).

The device may record information by focusing a laser beam of a recording pulse having a predetermined pulse train onto an information recording surface of an information recording medium and heating the information recording surface of the information recording medium so as to change the physical characteristics in the vicinity of the information recording surface.

For example, in the (1, 7) RLL modulation method, a shortest recording mark of 2T has a pulse train of a recording pulse including a top section and a last section. A recording mark which is longer than the shortest recording mark has a pulse train of a recording pulse including the top section, the last section, and an intermediate section which is provided between the top section and the last section and whose length is determined in accordance with the mark length. The present invention is not limited to the (1, 7) RLL modulation method. The (1, 7) RLL code is a code which limits a minimum value and a maximum value of an inversion interval in magnetic digital recording and optical digital recording.

In other modulation methods, for example, the shortest recording mark may be 3T. In this case, a shortest recording mark may include a top section, an intermediate section, and a last section. In another case, a shortest recording mark may include a top section only.

The symbol "T" (predetermined unit recording mark length) herein represents a time equivalent to one cycle of a clock. For example, a 3T recording mark length indicates a recording region where a recording mark is formed in time equivalent to three cycles of the clock.

The pulse train is formed from recording power, space power, bias power, and cooling power. Note that the recording power, the space power, the bias power, and the cooling power which form a pulse train are termed "recording power parameter". These recording power parameters are included in the foregoing recording parameters.

The recording power of the recording pulse of the top section, the recording power of the recording pulse of the intermediate section, and the recording power of the recording pulse of the last section may be identical to each other. However, the present invention is not limited to this. The recording power of the top section, the recording power of the intermediate section, and the recording power of the last section may be different from each other. Also, the smallest power may be the cooling power, the bias power, the space power, and the recording power, in this order. However, the present invention is not limited to this. Note that, it is preferable that the recording power of the recording pulse of either of the top section, the intermediate section or the last section has the highest value and the bias power or the cooling power has the lowest value.

In the (1, 7) RLL modulation method, a recording mark which is longer than the shortest recording mark has a pulse train of a recording pulse including a top section, an intermediate section, and a last section. Therefore, the top section, the intermediate section, and the last section of the pulse train are referred to as "top pulse", "intermediate pulse", and "last pulse", respectively.

According to the above arrangement, the recording parameters include: a first group of recording parameters used for controlling heat of a front edge of the recording mark; and a second group of recording parameters used for controlling heat of a rear edge of the recording mark.

The method includes the steps of classifying a first group of recording parameters used for controlling heat of a front edge of the recording mark; and classifying a second group of recording parameters used for controlling heat of a rear edge of the recording mark.

Note that the front edge is a position at which a forming process of a recording mark starts, and the rear edge is a position at which a forming process of a recording mark ends.

An exemplary recording parameter of the first group of recording parameters used for controlling heat of a front edge of the recording mark is a top section rise position at which a top pulse starts to rise or a top pulse width.

An exemplary recording parameter of the second group of recording parameters used for controlling heat of a rear edge of the recording mark is a last section rise position at which a last pulse starts to rise, a last pulse width, or a cooling end position at which a cooling period which involves irradiation of a cooling pulse ends. Such two exemplary recording parameters may be referred to as "recording pulse parameter".

According to the arrangement and the method, the first group of recording parameters is classified at least in accordance with an integral multiple of a predetermined unit recording mark length T out of the recording information, wherein recording parameters for recording mark lengths which fall in a range from a first predetermined recording mark length to a maximum recording mark length are classified into a group of recording parameters for odd mark lengths and a group of recording parameters for even mark lengths.

Meanwhile, the second group of recording parameters is classified in accordance with the integral multiple of the predetermined unit recording mark length, wherein recording parameters for recording mark lengths which fall in a range from longer than a second predetermined recording mark length to the maximum recording mark length are classified into a group of recording parameters for odd mark lengths and a group of recording parameters for even mark lengths.

Note that each of the first predetermined recording mark length and the second predetermined recording mark length indicates a range of the recording mark length in which a rear edge is supposed not to be affected by heat accumulated at a front edge of a recording mark, that is, in which the recording parameter of the rear edge is supposed to be controlled separately from the recording parameter of the front edge. Each of the first predetermined recording mark length and the second predetermined recording mark length is arbitrary set depending on the type of an information recording medium.

A relationship between the total number of classifications of the first group of recording parameters and the total number of classifications of the second group of recording parameters is expressed by the following equation.

The total number of classifications of the first group of recording parameters = the number of recording mark lengths which are shorter than the first predetermined recording mark length + one classification (i.e. the group of odd mark lengths) + one classification (i.e. the group of even mark lengths)

= the number of recording mark lengths which are shorter than the first predetermined recording mark length + two classifications

(Case where the following is satisfied: the first predetermined recording mark length = the second predetermined recording mark length)

the total number of classifications of the second group of recording parameters = the number of recording mark lengths which are shorter than the second predetermined recording mark length + one classification (i.e. the second predetermined recording mark length) + one classification (the group of odd mark lengths) + one classification (the group of even mark lengths)

= the number of classifications which are shorter than the second predetermined recording mark length + three classifications

difference between (i) the total number of classifications of the first group of recording parameters and (ii) the total number of classifications of the second group of recording parameters = one classification + the number of recording mark lengths which are shorter than the second predetermined recording mark length – the number of

recording mark lengths which are shorter than the first predetermined recording mark length = one classification

(Case where the following is satisfied: the first predetermined recording mark length < the second predetermined recording mark length)

the total number of classifications of the second group of recording parameters = the number of recording mark lengths which are shorter than the second predetermined recording mark length + one classification (i.e. the second predetermined recording mark length) + one classification (i.e. the group of odd mark lengths) + one classification (i.e. the group of even mark lengths)

= the number of recording mark lengths which are shorter than the second predetermined recording mark length + three classifications

difference between (i) the total number of classifications of the first group of recording parameters and (ii) the total number of classifications of the second group of recording parameters = one classification + the number of recording mark lengths which are shorter than the second predetermined recording mark length – the number of recording mark lengths which are shorter than the first predetermined recording mark length ≥ two classifications

The above description reveals that the total number of classifications of the second group of recording parameters is larger than the total classifications of the first group of recording parameters by not less than one classification. In a case where each of the first predetermined recording mark length and the second predetermined recording mark length is changed into a larger value, (i) the number of classifications of the first group of recording parameters out of the total number of classifications of the first group of recording parameters and the total number of classifications of the second group of recording parameters increases and (ii) the number of classifications of the second group of recording parameters out of the total number of classifications of the first group of recording parameters and the total number of classifications of the second group of recording parameters increases. Note that it is also possible that the value of the first predetermined recording mark length of the first group of recording parameters is fixed and the value of the second predetermined recording mark length is changed into a larger value.

The first group of recording parameters may contain a single kind of recording parameter or may contain plural kinds of recording parameter. The second group of recording parameters may contain a single kind of recording parameter or may contain plural kinds of recording parameter. In a case where plural kinds of recording parameter exist, such plural kinds of recording parameter may be the same or may be different in the number of classification.

For example, in a case where the second group of recording parameters contains a single kind of recording parameter, i.e., a recording parameter of a last pulse width, a last section pulse of all of the second group of recording parameters can be optimized more accurately.

On the other hand, in a case where the second group of recording parameters contains plural kinds of recording parameter, i.e., a last section rise position, a last pulse width, and a cooling end position, optimization can be carried out while a balance in a pulse train is secured.

Note that the last section rise position, the last pulse width, and the cooling end position may be the same or may be different in the number of classifications. It is only necessary that the number of classifications of the second group of recording parameters is larger than the number of classifications of the first group of recording parameters.

The above description has dealt with a case where three kinds of recording parameters are used. However, two kinds of recording parameters may be used.

It goes without saying that the same is true for the first group of recording parameters.

In the above description, a recording mark length is used as recording information to be classified in a look-up table. However, the present invention is not limited to this. For example, both of a recording mark length and a space length may be used as recording information in classifying the first group of recording parameters and the second group of recording parameters. In this case, if the classification of a space length is not changed and only the classification of a recording mark length is changed, the number of recording parameters can be reduced as in the present invention.

Since the total number of classification of the second group of recording parameters is larger than the total number of classifications of the first group of recording parameters, the recording parameters belonging to the respective classifications of the second group of recording parameters are set to be more detailed than the recording parameters belonging to the respective classifications of the first group of recording parameters. Thus, optimization of a reproduced signal quality can be carried out.

That is, according to the classifications or the classification method, the second group of recording parameters can be classified into more detailed groups than the first group of recording parameters. Also, it is possible to reduce the number of recording parameters, compared with a method in which both of the first group of recording parameters and the second group of recording parameters are classified into the increased number of groups.

A rear edge of a recording mark is more apt to be affected by heat than any other regions in the recording mark. Therefore, classifying the second group of recording parameters for controlling heat of a rear edge into more detailed groups allows to more strictly control heat of a rear edge, at which a forming process of a recording mark ends. This compensates the effect caused by accumulated heat, thereby forming a recording mark capable of providing a good reproduced signal quality.

As a result, it is possible to form a recording mark capable of more surely providing a good reproduced signal quality while the number of recording parameters to be used is reduced.

Thus, it is possible to provide a recording parameter setting device or a recording parameter setting method, each of which allows formation of a recording mark capable of more surely providing a good reproduced signal quality while the number of recording parameters to be used is reduced.

In addition to the above arrangement, the recording parameter setting device of the present invention may be arranged such that each of the recording parameters belonging to the second group is a last pulse width of a pulse train for forming a recording mark.

According to the arrangement, in which a last pulse width of a pulse train for forming a recording mark is the recording parameter for controlling the heat of the rear edge, it is possible to form a recording mark capable of more surely providing a good reproduced signal quality while the number of recording parameters to be used is reduced.

In addition to the above arrangement, the recording parameter setting device of the present invention may be arranged such that each of the recording parameters belonging to the second group is a last section rise position of a pulse train for forming a recording mark.

According to the arrangement, in which a last section rise position of a pulse train for forming a recording mark is the recording parameter for controlling the heat of the rear edge, it is possible to form a recording mark capable of more surely providing a good reproduced signal quality while the number of recording parameters to be used is reduced.

In addition to the above arrangement, the recording parameter setting device of the present invention may be arranged such that each of the recording parameters belonging to the second group is a cooling end position at which a cooling period ends in a pulse train for forming a recording mark.

According to the arrangement, in which a cooling end position at which a cooling period ends in a pulse train for forming a recording mark is the recording parameter for controlling the heat of the rear edge, it is possible to form a recording mark capable of more surely providing a good reproduced signal quality while the number of recording parameters to be used is reduced.

In addition to the above arrangement, the recording parameter setting device of the present invention may be arranged such that each of the recording parameters belonging to the first group is a top section rise position of a pulse train for forming a recording mark.

According to the arrangement, in which a top section rise position of a pulse train for forming a recording mark is the recording parameter for controlling the heat of the front edge, it is possible to form a recording mark capable of more surely providing a good reproduced signal quality while the number of recording parameters to be used is reduced.

In addition to the above arrangement, the recording parameter setting device of the present invention may be arranged such that each of the recording parameters belonging to the first group is a top section pulse width of a pulse train for forming a recording mark.

According to the arrangement, in which a top section pulse width of a pulse train for forming a recording mark is the recording parameter for controlling the heat of the front edge, it is possible to form a recording mark capable of more surely providing a good reproduced signal quality while the number of recording parameters to be used is reduced.

In addition to the above arrangement, the recording parameter setting device of the present invention may be arranged such that the first predetermined recording mark length is equal to or longer than 4T.

This allows a reduction in accumulated heat of a rear edge of a recording mark if the recording mark has a recording mark length in which a rear edge is supposed not to be affected by heat accumulated at a front edge of a recording mark, that is, in which the recording parameter of the rear edge is supposed to be controlled separately from the recording parameter of the front edge. Therefore, it is possible to form a recording mark capable of more surely providing a good reproduced signal quality while the number of recording parameters to be used is minimized.

The recording parameter setting device of the present invention configured to set a recording parameter for forming a recording mark on an information recording medium in accordance with recording information, includes: (i) trial recording parameter setting means configured to inquire, in accordance with the recording information, a storage section storing recording parameters used for controlling heat of rear edges of recording marks, and to set a trial recording parameter for carrying out trial recording, wherein the recording parameters are classified in accordance with at least an integral multiple of a predetermined unit recording mark length out of the recording information wherein recording parameters for recording mark lengths which fall in a range from a predetermined recording mark length to a maximum recording mark length are classified into a group of recording parameters for odd mark lengths and a group of recording parameters for even mark lengths; and (ii) reproduced signal quality judging means configured to perform reproduced signal quality judgment, wherein, if a reproduced signal obtained by reproduction of the trial recording carried out in accordance with the trial recording parameter does not satisfy a predetermined reproduced signal quality, the reproduced signal quality judging means further classifies the recording parameters for the recording mark lengths equal to or longer than the predetermined recording mark length into more detailed groups and causes to carry out the trial recording again , and if the reproduced signal satisfies the predetermined reproduced signal quality, the reproduced signal quality judging means sets the trial recording parameter as the recording parameter.

A recording parameter setting method of the present invention for setting a recording parameter for forming a recording mark on an information recording medium in accordance with recording information, includes the steps of: (a) inquiring, in accordance with the recording information, a storage section storing recording parameters used for controlling heat of rear edges of recording marks, and setting a trial recording parameter for carrying out trial recording, wherein the recording parameters are classified in accordance with at least an integral multiple of a predetermined unit recording mark length out of the recording information wherein recording parameters for recording mark lengths which fall in a range from a predetermined recording mark length to a maximum recording mark length are classified into a group of recording parameters for odd mark lengths and a group of recording parameters for even mark lengths; and(b) performing reproduced signal quality judgment, wherein, if a reproduced signal obtained by reproduction of the trial recording carried out in accordance with the trial recording parameter does not satisfy a predetermined reproduced signal quality, the recording parameters for the recording mark lengths equal to or longer than the predetermined recording mark length are further classified into more detailed groups and the trial recording is caused to be carried out again, and if the reproduced signal satisfies the predetermined reproduced signal quality, the trial recording parameter is set as the recording parameter.

According to the arrangement or the method, the trial recording parameter setting means or the step (a) is an arrangement or a method for setting a trial recording parameter for carrying out trial recording.

The reproduced signal quality judging means or the step (b) is configured to perform reproduced signal quality judgment, wherein, if a reproduced signal obtained by reproduction of the trial recording carried out in accordance with the trial recording parameter does not satisfy a predetermined reproduced signal quality, the reproduced signal quality judging means further classifies the recording parameters for the recording mark lengths equal to or longer than the predetermined recording mark length into more detailed groups and causes to carry out the trial recording again, and if the reproduced signal satisfies the predetermined reproduced signal quality, the reproduced signal quality judging means sets the trial recording parameter as the recording parameter.

That is, according to the arrangement or the method, the recording mark lengths equal to or longer than the predetermined recording mark length are further classified if the reproduced signal quality is bad due to the insufficient number of classification of the second group of recording parameters for controlling heat of the rear edge.

This makes it possible to provide a recording parameter setting device or a recording parameter setting method which is capable of more strictly control heat of a rear edge, at which a forming process of a recording mark ends, and compensating the effect caused by the heat accumulated at the rear edge, thereby forming a recording mark capable of providing a good reproduced signal quality.

In an arrangement where the second group of recording parameters fixed in advance is used, when a recording condition of a track on an information recording medium changes along with the lapse of time, the recording parameters cannot be changed accordingly so as to suit the change in the recording condition of the track. This may unable to form a recording mark capable of providing a good reproduced signal quality (i.e., a recording mark satisfying the predetermined reproduced signal quality) in a case where the recording condition of the track changes.

In contrast to this, the present invention has an arrangement where the second group of recording parameters is further classified depending on the result of trial recording. Therefore, even when the recording condition of the track on the information recording medium changes along with the lapse of time, the second group of recording parameters can be classified again so as to suit the change in the recording condition of the track. That is, it is possible to provide a recording parameter setting device or a recording parameter setting method in which, even when the recording condition of the track changes along with the lapse of time, a recording mark capable of providing a good reproduced signal quality (i.e., a recording mark satisfying the predetermined reproduced signal quality) can be formed.

Using data which is randomly selected gives an advantage such that a good reproduced signal quality can be achieved easily when recording marks are classified in steps from a recording mark having a shorter length.

Also, classifying recording mark lengths in steps from a recording mark having a shorter length allows the number of classifications of recording parameters to be a number just needed to satisfy a predetermined reproduced signal quality. That is, this gives an advantage such that the number of recording parameters in a look-up table is easily set to a number just needed to satisfy a predetermined reproduced signal quality.

For the reproduced signal quality, jitter, an error rate, or the like may be used. When every information recording medium has different bottom-level specs in jitter, an error rate, or the like, a bottom-level value prescribed by the specs may be used as a predetermined reproduced signal quality.

The predetermined reproduced signal quality herein means a level where an error in a reproduced signal can be corrected by the recording parameter setting device. The predetermined reproduced signal quality only needs to be capable of ensuring allowance for a quality fluctuation in the recording parameter setting device or the information recording medium of the present invention described below which occurs due to mass production or the other reasons.

As described above, according to the present invention, the process of determining the recording parameter which satisfies the predetermined reproduced signal quality proceeds while the number of classifications of the second group of recording parameters is being increased. This makes it possible to further reduce the number of classifications of the second group of recording parameters in a case where the recording parameter satisfying the predetermined reproduced signal quality is determined. At least a recording parameter for controlling heat of a rear edge is determined so as to satisfy the predetermined reproduced signal quality. This compensates the effect caused by the heat accumulated at the rear edge, thereby forming a recording mark capable of providing a good reproduced signal quality. This makes it possible to form a recording mark capable of more surely providing a good reproduced signal quality while the number of recording parameters to be used is reduced.

In addition to the above arrangement, the recording parameter setting device of the present invention may be arranged such that the recording parameter is a last pulse width of a pulse train for forming the recording mark.

According to the arrangement, in which a last pulse width of a pulse train for forming the recording mark is the recording parameter for controlling the heat of the rear edge, it is possible to form a recording mark capable of more surely providing a good reproduced signal quality while the number of recording parameters to be used is reduced.

In addition to the above arrangement, the recording parameter setting device of the present invention may be arranged such that the recording parameter is a last pulse width of a pulse train for forming the recording mark.

According to the arrangement, in which a last section rise position of a pulse train for forming the recording mark is the recording parameter for controlling the heat of the rear edge, it is possible to form a recording mark capable of more surely providing a good reproduced signal quality while the number of recording parameters to be used is reduced.

In addition to the above arrangement, the recording parameter setting device of the present invention may be arranged such that the recording parameter is a cooling end position at which a cooling period ends in a pulse train for forming the recording mark.

According to the arrangement, in which a cooling end position at which a cooling period ends in a pulse train for forming the recording mark is the recording parameter for controlling the heat of the rear edge, it is possible to form a recording mark capable of more surely providing a good reproduced signal quality while the number of recording parameters to be used is reduced.

In addition to the above arrangement, the recording parameter setting device of the present invention may be arranged such that the predetermined recording mark length is equal to or longer than 4T.

This allows a reduction in accumulated heat of a rear edge of a recording mark if the recording mark has a recording mark length in which a rear edge is supposed not to be affected by heat accumulated at a front edge of a recording mark, that is, in which the recording parameter of the rear edge is supposed to be controlled separately from the recording parameter of the front edge. Therefore, it is possible to form a recording mark capable of more surely providing a good reproduced signal quality while the number of recording parameters to be used is minimized.

An information recording medium of the present invention configured to store, in a predetermined region, recording parameters for forming a recording mark in accordance with recording information, may be arranged such that the recording parameters include: a first group of recording parameters used for controlling heat of a front edge of the recording mark; and a second group of recording parameters used for controlling heat of a rear edge of the recording mark, the first group of recording parameters being classified at least in accordance with an integral multiple of a predetermined unit recording mark length out of the recording information, wherein recording parameters for recording mark lengths which fall in a range from a first predetermined recording mark length to a maximum recording mark length are classified into a group of recording parameters for odd mark lengths and a group of recording parameters for even mark lengths, the second group of recording parameters being classified in accordance with the integral multiple of the predetermined unit recording mark length wherein recording parameters for recording mark lengths which fall in a range from longer than a second predetermined recording mark length to the maximum recording mark length are classified into a group of recording parameters for odd mark lengths and a group of recording parameters for even mark lengths, the second predetermined recording mark length being equal to or longer than the first predetermined recording mark length.

The information recording medium of the present invention is preferably arranged so as to store, in a predetermined region, the recording parameter set by the above-mentioned recording parameter setting device.

With the foregoing arrangement, after the second group of recording parameters is set in advance by carrying out trial recording, the second group of recording parameters can be used as trial recording parameters in another recording operation. This makes it possible to reduce the number of trial recording carried out repeatedly until a recording parameter is determined. In addition, this eliminates the necessity of adding a new recording device such as a memory.

This is because the predetermined region on the information recording medium stores the second group of recording parameters after the second group of recording parameters are set.

When the recording parameters stored in the predetermined region of the information recording medium are read out by the recording parameter setting device including storage means for storing the recording parameters, and stored (i.e., recorded) in the storage means, the second group of recording parameters (out of the first group of recording parameters for controlling heat of a front edge and the second group of recording parameters for controlling heat of a rear edge each of which is stored in the storage means at the time of starting the trial recording operation) is classified to have more detailed groups than the first group of recording parameters.

That is, the following recording parameters are included: (i) the first group of recording parameters for controlling heat of a front edge, wherein recording parameters for recording mark lengths which fall in a range from a first predetermined recording mark length to a maximum recording mark length are classified into a group of recording parameters for odd mark lengths and a group of recording parameters for even mark lengths; (ii) the second group of recording parameters for controlling heat of a rear edge, wherein recording parameters for recording mark lengths which fall in a range from longer than a second predetermined recording mark length to the maximum recording mark length are classified into a group of recording parameters for odd mark lengths and a group of recording parameters for even mark lengths, the second predetermined recording mark length being equal to or longer than the first predetermined recording mark length.

That is, according to the classifications or the classification method, the second group of recording parameters can be classified into more detailed groups than the first group of recording parameters. Also, it is possible to reduce the number of recording parameters, compared with a method in which both of the first group of recording parameters and the second group of recording parameters are classified into the increased number of groups.

A rear edge of a recording mark is more apt to be affected by heat than any other regions in the recording mark. Therefore, classifying the second group of recording parameters for controlling heat of a rear edge into more detailed groups allows to more strictly control heat of a rear edge, at which a forming process of a recording mark ends. This compensates the effect caused by accumulated heat, thereby forming a recording mark capable of providing a good reproduced signal quality.

As a result, it is possible to provide a recording parameter setting device, a recording parameter setting method, and an information recording medium etc. each of which allows formation of a recording mark capable of more surely providing a good reproduced signal quality while the number of recording parameters to be used is reduced.

Note that the recording parameter setting device may be realized by a computer. In this case, the present invention includes a control program for controlling the parameter setting device and for causing a computer to function as each means, and a computer-readable recording medium in which the control program is stored.

Industrial Applicability

A recording parameter setting device, a program thereof, a computer-readable recording medium storing the program, an information recording medium, a recording/ reproducing device, and a recording parameter setting method, each of which relates to the present invention, make it possible to form a recording mark capable of surely providing a good reproduced signal quality while the number of recording parameters to be used is reduced. Therefore, the present invention is preferably used in an industrial field where an information recording medium such as an optical disc and a magneto-optical disc is used, particularly in an industrial field where an information recording medium capable of recording at a high speed is used.

**Claims**

1. A recording parameter setting device configured to set recording parameters for forming a recording mark on an information recording medium in accordance with recording information,
   wherein the recording parameters include:

   a first group of recording parameters used for controlling heat of a front edge of the recording mark; and
   a second group of recording parameters used for controlling heat of a rear edge of the recording mark,
   the first group of recording parameters being classified at least in accordance with an integral multiple of a predetermined unit recording mark length out of the recording information, wherein recording parameters for recording mark lengths which fall in a range from a first predetermined recording mark length to a maximum recording mark length are classified into a group of recording parameters for odd mark lengths and a group of recording parameters for even mark lengths,
   the second group of recording parameters being classified in accordance with the integral multiple of the predetermined unit recording mark length wherein recording parameters for recording mark lengths which fall in a range from longer than a second predetermined recording mark length to the maximum recording mark length are classified into a group of recording parameters for odd mark lengths and a group of recording parameters for even mark lengths, the second predetermined recording mark length being equal to or longer than the first predetermined recording mark length.

2. The recording parameter setting device according to claim 1, wherein
each of the recording parameters belonging to the second group is a last pulse width of a pulse train for forming a recording mark.

3. The recording parameter setting device according to claim 1, wherein
each of the recording parameters belonging to the second group is a last section rise position of a pulse train for forming a recording mark.

4. The recording parameter setting device according to claim 1, wherein
each of the recording parameters belonging to the second group is a cooling end position at which a cooling period ends in a pulse train for forming a recording mark.

5. The recording parameter setting device according to any one of claims 1 through 4, wherein
each of the recording parameters belonging to the first group is a top section rise position of a pulse train for forming a recording mark.

6. The recording parameter setting device according to any one of claims 1 through 4, wherein
each of the recording parameters belonging to the first group is a top pulse width of a pulse train for forming a recording mark.

7. The recording parameter setting device according to claim 1, wherein
the recording parameters belonging to the second group are classified so that (i) recording parameters for recording mark lengths equal to or longer than the second predetermined recording mark length are classified into (a) a group of recording parameters for the recording mark length equal to the second predetermined recording mark length and (b) another group of recording parameters for the recording mark lengths longer than the second predetermined recording mark length, and (ii) the recording parameters for the recording mark lengths longer than the second predetermined recording mark length are classified into the group of recording parameters for odd mark lengths and the group of recording parameters for even mark lengths.

8. The recording parameter setting device according to any one of claims 1 through 7, wherein
the first predetermined recording mark length is equal to or longer than 4T.

9. A recording parameter setting device configured to set a recording parameter for forming a recording mark on an information recording medium in accordance with recording information, comprising:

(i) trial recording parameter setting means configured to inquire, in accordance with the recording information, a storage section storing recording parameters used for controlling heat of rear edges of recording marks, and to set a trial recording parameter for carrying out trial recording, wherein the recording parameters are classified in accordance with at least an integral multiple of a predetermined unit recording mark length out of the recording information wherein recording parameters for recording mark lengths which fall in a range from a predetermined recording mark length to a maximum recording mark length are classified into a group of recording parameters for odd mark lengths and a group of recording parameters for even mark lengths; and
(ii) reproduced signal quality judging means configured to perform reproduced signal quality judgment, wherein, if a reproduced signal obtained by reproduction of the trial recording carried out in accordance with the trial recording parameter does not satisfy a predetermined reproduced signal quality, the reproduced signal quality judging means further classifies the recording parameters for the recording mark lengths equal to or longer than the predetermined recording mark length into more detailed groups and causes to carry out the trial recording again, and if the reproduced signal satisfies the predetermined reproduced signal quality, the reproduced signal quality judging means sets the trial recording parameter as the recording parameter.

10. The recording parameter setting device according to claim 9, wherein
the reproduced signal quality judging means further classifies the recording parameters for the recording mark lengths equal to or longer than the predetermined recording mark length into (a) a group of recording parameters for a recording mark length equal to the predetermined recording mark length and (b) another group of recording parameters for recording mark lengths longer than the predetermined recording mark length, if the reproduced signal does not satisfy the predetermined reproduced signal quality.

11. The recording parameter setting device according to claim 9, wherein
each of the recording parameters is a last pulse width of a pulse train for forming a recording mark.

12. The recording parameter setting device according to claim 9, wherein
each of the recording parameters is a last section fall position of a pulse train for forming a recording mark.

13. The recording parameter setting device according to claim 9, wherein
each of the recording parameters is a cooling end position at which a cooling period ends in a pulse train for forming a recording mark.

14. The recording parameter setting device according to any one of claims 9 through 13, wherein
the predetermined recording mark length is equal to or longer than 4T.

15. An information recording medium configured to store, in a predetermined region, the recording parameter which is set by a recording parameter setting device recited in any one of claims 1 through 14.

16. An information recording medium configured to store, in a predetermined region, recording parameters for forming a recording mark in accordance with recording information,
wherein the recording parameters include:

a first group of recording parameters being classified at least in accordance with an integral multiple of a predetermined unit recording mark length out of the recording information, wherein recording parameters for recording mark lengths which fall in a range from a first predetermined recording mark length to a maximum recording mark length are classified into a group of recording parameters for odd mark lengths and a group of recording parameters for even mark lengths,
a second group of recording parameters being classified in accordance with the integral multiple of the predetermined unit recording mark length wherein recording parameters for recording mark lengths which fall in a range from longer than a second predetermined recording mark length to the maximum recording mark length are classified into a group of recording parameters for odd mark lengths and a group of recording parameters for even mark lengths, the second predetermined recording mark length being equal to or longer than the first predetermined recording mark length.

17. A recording parameter setting program configured to cause a computer to operate as the means included in a recording parameter setting device recited in any one of claims 9 through 14.

18. A computer-readable recording medium in which a recording parameter setting program recited in claim 17 is stored.

19. A recording parameter setting method for setting recording parameters for forming a recording mark on an information recording medium in accordance with recording information,
wherein the recording parameters include:

a first group of recording parameters used for controlling heat of a front edge of the recording mark; and
a second group of recording parameters used for controlling heat of a rear edge of the recording mark,

the recording parameter setting method comprising the steps of:

(a) classifying the first group of recording parameters at least in accordance with an integral multiple of a predetermined unit recording mark length out of the recording information, wherein recording parameters for recording mark lengths which fall in a range from a first predetermined recording mark length to a maximum recording mark length are classified into a group of recording parameters for odd mark lengths and a group of recording parameters for even mark lengths,
(b) classifying the second group of recording parameters in accordance with the integral multiple of the predetermined unit recording mark length wherein recording parameters for recording mark lengths which fall in a range from longer than a second predetermined recording mark length to the maximum recording mark length are classified into a group of recording parameters for odd mark lengths and a group of recording parameters for even mark lengths, the second predetermined recording mark length being equal to or longer than the first predetermined recording mark length.

20. A recording parameter setting method for setting a recording parameter for forming a recording mark on an information recording medium in accordance with recording information, comprising the steps of:

(a) inquiring, in accordance with the recording information, a storage section storing recording parameters used for controlling heat of rear edges of recording marks, and setting a trial recording parameter for carrying out trial recording, wherein the recording parameters are classified in accordance with at least an integral multiple of a predetermined unit recording mark length out of the recording information wherein recording parameters for recording mark lengths which fall in a range from a predetermined recording mark length to a maximum recording mark length are classified into a group of recording parameters for odd mark lengths and a group of recording parameters for even mark lengths; and
(b) performing reproduced signal quality judgment, wherein, if a reproduced signal obtained by reproduction of the trial recording carried out in accordance with the trial recording parameter does not satisfy a predetermined reproduced signal quality, the recording parameters for the recording mark lengths equal to or longer than the predetermined recording mark length are further classified into more detailed groups and the trial recording is caused to be carried out again, and if the reproduced signal satisfies the predetermined reproduced signal quality, the trial recording parameter is set as the recording parameter.

FIG. 1

RECORDING INFORMATION

20

21

22
RECORDING INFORMATION
ACQUISITION SECTION

RECORDING
INFORMATION

23
TRIAL RECORDING PARAMETER
SETTING SECTION

INQUIRY

3
STORAGE
SECTION

RECORDING
PARAMETER

RECORDING
PARAMETER

TRIAL
RECORDING
PARAMETER
MODIFICATION
COMMAND

24
TRIAL RECORDING
INSTRUCTION SECTION

INSTRUCTION OF
TRIAL RECORDING

TRIAL
RECORDING
EXECUTION

25
REPRODUCED SIGNAL
ACQUISITION
SECTION

REPRODUCED
SIGNAL

RECORDING
PARAMETER

26
REPRODUCED SIGNAL
QUALITY JUDGING SECTION

REPRODUCED
SIGNAL

RESET CLASSIFICATION OF
LOOK-UP TABLE INTO MORE
DETAILED GROUPS

RECORDING
PARAMETER

27
RECORDING INSTRUCTION
SECTION

INSTRUCTION OF RECORDING

EXECUTION OF RECORDING

EP 2 214 167 A1

FIG. 2

1 : OPTICAL DISC DEVICE

10 : RECORDING/REPRODUCING CIRCUIT GROUP

2

OPTICAL DISC

11

OPTICAL HEAD

12 : OPTICAL PICKUP

13

PICKUP DRIVING CIRCUIT

14

LASER DRIVING CIRCUIT

15

REPRODUCING CIRCUIT

20

CONTROL SECTION

3

STORAGE SECTION

EP 2 214 167 A1

FIG. 3

41 : SETTING REGION
42 : USER REGION
2 : OPTICAL DISC
LIGHT BEAM

FIG. 4

CLOCK INTERVAL "T"

RECORDING
INFORMATION

1

0

INTERMEDIATE PERIOD

TOP PULSE     INTERMEDIATE PULSE     LAST PULSE

RECORDING POWER Pw

RECORDING PULSE
(6T SIGNAL)

COOLING PERIOD

SPACE POWER Ps

BIAS POWER Pbw

COOLING POWER Pc

TOP SECTION
RISE
POSITION

INTERMEDIATE
PULSE RISE
POSITION

LAST SECTION
RISE
POSITION

COOLING END
POSITION

RECORDING
MARK SHAPE

FIG. 5

## FIG. 6

```
                    ┌─────────────┐
                    │    START    │
                    └──────┬──────┘
                           │
        ┌──────────────────────────────────┐
        │  ACQUISITION OF RECORDING         │
        │  INFORMATION TO BE RECORDED       ├──S1
        │  ON OPTICAL DISC                  │
        └──────────────────┬───────────────┘
                           │
        ┌──────────────────────────────────┐
        │  INQUIRY TO STORAGE SECTION       │
        │  ACCORDING TO RECORDING           │
        │  INFORMATION ACQUIRED AND SETTING ├──S2
        │  OF TRIAL RECORDING PARAMETER     │
        └──────────────────┬───────────────┘
                           │
        ┌──────────────────────────────────┐
        │  INSTRUCTION OF TRIAL             ├──S3
        │  RECORDING                        │
        └──────────────────┬───────────────┘
                           │
        ┌──────────────────────────────────┐
        │  EXECUTION OF TRIAL               ├──S4
        │  RECORDING                        │
        └──────────────────┬───────────────┘
                           │
        ┌──────────────────────────────────┐
        │  REPRODUCTION OF TRIAL            ├──S5
        │  RECORDING                        │
        └──────────────────┬───────────────┘
                           │
        ┌──────────────────────────────────┐
        │  ACQUISITION OF REPRODUCED        ├──S6
        │  SIGNAL                           │
        └──────────────────┬───────────────┘
```

S7 — DOES REPRODUCED SIGNAL SATISFY PREDETERMINED REPRODUCED SIGNAL QUALITY?  NO / YES

S11 — RESET OF CLASSIFICATION IN LOOK-UP TABLE INTO DETAILED GROUPS

S9 — DOES THE NUMBER OF CLASSIFICATIONS IN LOOK-UP TABLE IS EQUAL TO OR ABOVE PREDETERMINED VALUE?  NO / YES

S8 — DETERMINATION OF RECORDING PARAMETER

S10 — DISPLAY OF ERROR

```
                    ┌─────────────┐
                    │     END     │
                    └─────────────┘
```

FIG. 7

| | RECORDING MARK LENGTH | |
|---|---|---|
| | 4T, 6T, 8T | 5T, 7T, 9T |
| Tlp | c4 | c5 |

FIG. 8

| | RECORDING MARK LENGTH | | |
|---|---|---|---|
| | 4T | 6T, 8T | 5T, 7T, 9T |
| Tlp | c4 | c6 | c5 |

FIG. 9

| | RECORDING MARK LENGTH | | | |
|---|---|---|---|---|
| | 4T | 5T | 6T, 8T | 7T, 9T |
| Tlp | c4 | c5 | c6 | c7 |

FIG. 10

| | RECORDING MARK LENGTH | | | | |
|---|---|---|---|---|---|
| | 4T | 5T | 6T | 8T | 7T, 9T |
| Tlp | c4 | c5 | c6 | c8 | c7 |

FIG. 11

| | RECORDING MARK LENGTH | | | |
|---|---|---|---|---|
| | 2T | 3T | 4T, 6T, 8T | 5T, 7T, 9T |
| dTtop | d2 | d3 | d4 | d5 |

FIG. 12

| | JITTER [%] | | |
|---|---|---|---|
| | BOTH EDGE | FRONT EDGE | REAR EDGE |
| CONDITION 1 | 7. 05 | 6. 55 | 7. 35 |
| CONDITION 2 | 6. 8 | 6. 5 | 7. 1 |
| CONDITION 3 | 6. 75 | 6. 5 | 7. 0 |
| CONDITION 4 | 6. 65 | 6. 5 | 6. 8 |

## FIG. 13

(a)

| | RECORDING MARK LENGTH | | | |
|---|---|---|---|---|
| | 2T | 3T | 4T, 6T, 8T | 5T, 7T, 9T |
| dTtop | e2 | e3 | e4 | e5 |

(b)

| | RECORDING MARK LENGTH | | |
|---|---|---|---|
| | 4T | 6T, 8T | 5T, 7T, 9T |
| Tlp | f4 | f6 | f5 |

FIG. 14

| | | RECORDING MARK LENGTH | | |
|---|---|---|---|---|
| | | 2T | 3T | 4T OR LONGER |
| FRONT SPACE LENGTH | 2T | a22 | a23 | a24 |
| | 3T | a32 | a33 | a34 |
| | 4T | a42 | a43 | a44 |
| | 5T OR LONGER | a52 | a53 | a54 |

FIG. 15

| | | RECORDING MARK LENGTH | |
|---|---|---|---|
| | | 3T | 4T OR LONGER |
| REAR SPACE LENGTH | 2T | b23 | b24 |
| | 3T | b33 | b34 |
| | 4T | b43 | b44 |
| | 5T OR LONGER | b53 | b54 |

## INTERNATIONAL SEARCH REPORT

| International application No. |
| --- |
| PCT/JP2008/066230 |

A. CLASSIFICATION OF SUBJECT MATTER
*G11B7/0045*(2006.01)i

According to International Patent Classification (IPC) or to both national classification and IPC

B. FIELDS SEARCHED

Minimum documentation searched (classification system followed by classification symbols)
G11B7/00-G11B7/013

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2006-338879 A (Matsushita Electric Industrial Co., Ltd.), 14 December, 2006 (14.12.06), Par. Nos. [0035] to [0038], [0061], [0062], [0082] to [0084], [0374] to [0430]; Figs. 28 to 32 (Family: none) | 1-8,15,16,19 |
| Y | JP 2005-71396 A (Mitsubishi Chemical Corp.), 17 March, 2005 (17.03.05), Par. Nos. [0012] to [0015], [0100] to [0136], [0147], [0151], [0155]; Figs. 3 to 4 (Family: none) | 1-8,15,16,19 |

|X| Further documents are listed in the continuation of Box C.    | | See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 December, 2008 (05.12.08) | 16 December, 2008 (16.12.08) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

50

**INTERNATIONAL SEARCH REPORT**

International application No.

PCT/JP2008/066230

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 2005-166161 A　(Ricoh Co., Ltd.),<br>23 June, 2005 (23.06.05),<br>Full text; Figs. 1 to 7<br>(Family: none) | 1-8,15,16,19 |
| Y<br>A | JP 2006-216154 A　(Matsushita Electric<br>Industrial Co., Ltd.),<br>17 August, 2006 (17.08.06),<br>Full text; Figs. 1 to 10<br>(Family: none) | 1-8,15,16,19<br>9-14,17,18,<br>20 |
| A | JP 2000-231719 A　(Matsushita Electric<br>Industrial Co., Ltd.),<br>22 August, 2000 (22.08.00),<br>Full text; Figs. 1 to 28<br>& US 6101159 A　　　　　& EP 984441 A1 | 9-14,17,18,<br>20 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005092942 A
- JP 2005092906 A
- JP 2007317343 A